# EUROPEAN PATENT SPECIFICATION

(11) **EP 3 239 485 B1**
(45) Date of publication and mention of the grant of the patent: **21.07.2021**
(21) Application number: 15870106.0
(22) Date of filing: 18.12.2015
(51) Int. Cl.: F01N 3/24, F01N 3/20, F01N 3/28, F01N 11/00, F01N 13/00, F01N 13/08, F01N 13/10, B62M 7/02, F02D 41/14

(54) **STRADDLED VEHICLE**
GRÄTSCHSITZFAHRZEUG
VÉHICULE ENFOURCHÉ

(30) Priority: 19.12.2014 JP 2014256984; 19.12.2014 JP 2014256983; 19.12.2014 JP 2014256985; 06.04.2015 JP 2015077744; 07.08.2015 JP 2015157520
(43) Date of publication of application: 01.11.2017
(73) Proprietor: Yamaha Hatsudoki Kabushiki Kaisha, Iwata-shi, Shizuoka 438-8501 (JP)
(72) Inventor: HARA, Takahiko, Iwata-shi Shizuoka 438-8501 (JP); TAKASU, Daisuke, Iwata-shi Shizuoka 438-8501 (JP); WAKIMURA, Makoto, Iwata-shi Shizuoka 438-8501 (JP); OKU, Yuji, Iwata-shi Shizuoka 438-8501 (JP); KOBAYASHI, Makoto, Iwata-shi Shizuoka 438-8501 (JP)
(74) Representative: Stöckeler, Ferdinand
(86) International application number: PCT/JP2015/085597
(87) International publication number: WO 2016/098907

(56) References cited:
- EP-A1- 2 031 200
- EP-A1- 2 806 128
- JP-A- 2002 070 549
- JP-A- 2006 281 858
- JP-A- 2007 023 802
- JP-A- 2007 045 291
- JP-A- 2007 051 571
- JP-A- 2009 008 088
- JP-A- 2009 156 249
- JP-A- 2010 209 815
- JP-A- 2010 209 815
- JP-A- 2010 269 725
- JP-A- 2012 026 306
- JP-A- 2012 184 736
- JP-A- 2014 227 843
- US-A1- 2007 039 317
- US-A1- 2009 000 862
- None

## Description

### [Technical Field]

The present invention relates to a straddled vehicle.

### [Background Art]

A known straddled vehicle is provided with an engine unit in which a plurality of independent exhaust passage members are connected to an engine main body. Exhaust gas discharged from the engine main body flows into these independent exhaust passage members. The independent exhaust passage members are typically connected to a catalyst portion (catalytic converter) via a collective exhaust passage member. Exhaust gas discharged from the independent exhaust passage members is gathered in the collective exhaust passage member. A catalyst for purifying the exhaust gas is provided inside the catalyst portion.

The catalyst portion is, for example, provided straight or directly below the engine main body (see e.g., Patent Literatures 1 and 2). The cross-sectional area of the catalyst portion is larger than that of the collective exhaust passage member. Each cross-sectional area is a cross-sectional area cut along the direction orthogonal to the flow direction of the exhaust gas. When the catalyst portion is provided straight below the engine main body so that the flow direction of the exhaust gas is along the front-rear direction, the catalyst portion is long in the up-down direction. Due to this, the seat or the like needs to be positioned higher to ensure a sufficient distance between the ground and the catalyst portion, with the result that the straddled vehicle is disadvantageously large in the up-down direction.

To solve this problem, Patent Literatures 1 and 2 employ structures described below. According to Patent Literature 1, four independent exhaust passage members are arranged such that each of two pairs of independent exhaust passage members is connected to one collective exhaust passage member. The two collective exhaust passage members are connected to two catalyst portions, respectively. The two catalyst portions are provided side by side in the vehicle width direction. In other words, according to Patent Literature 1, two catalysts are provided for four independent exhaust passage members and these two catalysts are provided to be side by side in the vehicle width direction. The catalyst portions are short in the up-down direction for this reason.

According to Patent Literature 2, two catalysts are provided side by side in a flow direction of exhaust gas (i.e., in the front-rear direction) inside a catalyst portion. Furthermore, the cross-sectional shape of each catalyst cut along the direction orthogonal to the flow direction of the exhaust gas is arranged to be elliptical and laterally long. The catalyst portions are short in the up-down direction for this reason.

In this way, according to Patent Literatures 1 and 2, the increase in size of the vehicle in the up-down direction is restrained while a suitable distance between the ground and the catalyst portion is ensured, by suitably arranging the layout or shape of the catalyst.

### [Citation List]

### [Patent Literatures]

[Patent Literature 1] Japanese Unexamined Patent Publication No. 2007-51571
[Patent Literature 2] Japanese Unexamined Patent Publication No. 2010-269725
[Patent Literature 3] US 2009/0000862 A1, which discloses an exhaust system for a motocycle engine including a muffler assemby.

### [Summary of Invention]

### [Technical Problem]

These days, straddled vehicles are required to maintain the initial performances as long as possible. For example, straddled vehicles are required to maintain the initial performances of exhaust gas purification. For this reason, catalysts tend to be increased in size with the assumption of the deterioration.

According to Patent Literatures 1 and 2 above, the catalyst portion has already been arranged to be short in the up-down direction. Due to this, if the size of the catalyst is increased in the straddled vehicles of Patent Literatures 1 and 2, it is difficult to keep the catalyst portion short in the up-down direction. It is therefore difficult to restrain the increase in size of the vehicle in the up-down direction while securing a suitable distance between the ground and the catalyst portion.

An object of the present invention is to provide a straddled vehicle in which the increase in size of the vehicle is restrained in an up-down direction while initial performances of exhaust gas purification are maintained for a long time.

### [Solution to Problem and Advantageous Effects]

A known means for maintaining the initial performances of exhaust gas purification of a vehicle is to upsize a catalyst. Inventors of the subject application reconsidered a reason why the upsizing of a catalyst was required. The degree of deterioration of the catalyst varies in accordance with the working condition of the vehicle. In other words, the deterioration of the catalyst may advance, depending on the working condition of the vehicle. Typically the purification capability of the catalyst is redundantly high in order to maintain the initial performances of the exhaust gas purification of the vehicle for a long time even if the deterioration of the catalyst advances. Because of such an arrangement of the purification capability of the catalyst, the catalyst is upsized.

In this regard, the inventors of the subject application found that the deterioration of the catalyst did not occur often. Based on this, the inventors of the subject application did away with the redundancy in the purification capability of the catalyst, with the assumption of less-frequent deterioration of the catalyst. Instead of the redundancy, the inventors have reached an idea to maintain the exhaust gas purification of the vehicle for a longer time based on two different technical ideas described below. One technical idea is to control an engine so as to retard the advancement of the deterioration of the catalyst in order to reduce the frequency of the occurrence of the deterioration of the catalyst. The other technical idea is to prompt a rider or the like to replace the catalyst before the deterioration of the catalyst reaches a predetermined level. Upon implementing at least one of the two technical ideas, the inventors found that the initial performances of the exhaust gas purification of the vehicle are maintained for a longer time while the size of the catalyst can be maintained. As a way of realizing at least one of these two technical ideas, the inventors of the subject application conceived of providing oxygen sensors upstream and downstream of a catalyst portion and employing a controller for processing signals from the two oxygen sensors. The inventors of the present application have found that the increase in size of the vehicle in the up-down direction is further restrained when the positions of a catalyst portion is modified.

A straddled vehicle of the present teaching includes the features of claim 1 .

According to the structure, the straddled vehicle includes the vehicle body frame, the engine unit, the front wheel unit, and the rear wheel unit. Hereinafter, a left-right direction, a front-rear direction, and an up-down direction are a vehicle left-right direction, a vehicle front-rear direction, and a vehicle up-down direction, respectively. The engine unit is supported by the vehicle body frame. The front wheel unit includes at least one front wheel. The front wheel unit is provided in front of the engine unit when viewed in the left-right direction. The rear wheel unit includes at least one rear wheel. The rear wheel unit is provided behind the engine unit when viewed in the left-right direction. The engine unit includes the engine main body and the exhaust device. The engine main body includes the crankshaft having the central axis along the left-right direction. The engine main body includes the cylinder holes and the combustion chambers. Each of the cylinder holes has a central axis along the up-down direction. In this connection, the definition that a central axis is along the up-down direction is not limited to cases where the central axis is in parallel to the up-down direction. The definition encompasses cases where the central axis is tilted by +45 to -45 degrees with respect to the up-down direction. The cylinder holes are side by side in the left-right direction. A part of each of the combustion chambers is formed by each of the cylinder holes. The exhaust ports communicating with the respective combustion chambers are formed in the outer surface of the engine main body. The exhaust device is connected to the exhaust ports of the engine main body. The exhaust device has the atmosphere discharge port for discharging the exhaust gas to the atmosphere. The exhaust device includes the independent exhaust passage members, the upstream collective exhaust passage member, the catalyst portion, the downstream collective exhaust passage member, the upstream oxygen sensor, and the downstream oxygen sensor. The independent exhaust passage members are connected to the exhaust ports of the engine main body, respectively. The exhaust gas discharged from the engine main body flows in the independent exhaust passage members. The upstream collective exhaust passage member is connected to the downstream ends of the independent exhaust passage members. The upstream collective exhaust passage member gathers the exhaust gas discharged from the independent exhaust passage members. The catalyst portion is connected to the downstream end of the upstream collective exhaust passage member. The catalyst portion includes the main catalyst. In the exhaust paths from the combustion chambers to the atmosphere discharge port, the main catalyst purifies the exhaust gas discharged from the combustion chambers most. The length in the flow direction of the exhaust gas of the catalyst portion is identical to the length in the flow direction of the exhaust gas of the main catalyst. Furthermore, the center of the upstream end of the catalyst portion is forward of and above the center of the downstream end of the catalyst portion. It is assumed that a linear line which is orthogonal to the central axis of the cylinder hole and passes the central axis of the crankshaft when viewed in the left-right direction is a linear line L. When viewed in the left-right direction, the center of the upstream end of the catalyst portion is positioned behind the linear line L and forward of the central axis of the crankshaft. The downstream collective exhaust passage member is connected to the downstream end of the catalyst portion. The downstream collective exhaust passage member has the atmosphere discharge port. The engine unit includes the controller. The controller processes the signal from the upstream oxygen sensor and the signal from the downstream oxygen sensor.

In the straddled vehicle structured above, the upstream oxygen sensor is provided on the upstream collective exhaust passage member. In other words, the upstream oxygen sensor is provided upstream of the catalyst portion. The upstream oxygen sensor is configured to detect the oxygen density in the exhaust gas in the upstream collective exhaust passage member. The downstream oxygen sensor is provided on the downstream collective exhaust passage member. In other words, the downstream oxygen sensor is provided downstream of the catalyst portion. The downstream oxygen sensor is configured to detect the oxygen density in the exhaust gas in the downstream collective exhaust passage member. With this arrangement, the deterioration in the main catalyst is detectable by using the signal from the downstream oxygen sensor. This makes it possible to notify the rider or the like of the replacement of the main catalyst before the deterioration of the main catalyst reaches a predetermined level. By means of the replacement of the main catalyst, the initial performance of the vehicle in connection with the exhaust gas purification is therefore maintained for a longer time by using a plurality of main catalysts.

Furthermore, the deterioration of the main catalyst may be detected by using the signal from the upstream oxygen sensor in addition to the signal from the downstream oxygen sensor. By using signals from two oxygen sensors, the degree of deterioration of the main catalyst is further precisely detectable. It is therefore possible to use one main catalyst for a longer time when compared to cases where the deterioration of the main catalyst is detected by using only the signal from the downstream oxygen sensor. Therefore, the initial performance of the vehicle in connection with the exhaust gas purification is maintained for a longer time by means of a plurality of main catalysts.

Furthermore, because the signal from the upstream oxygen sensor and the signal from the downstream oxygen sensor are used, the actual purification capability of the main catalyst is detected. Due to this, because the fuel control is executed based on the signals from the two oxygen sensors, the precision of the fuel control is improved when compared to cases where fuel control is executed based solely on the signal from the upstream oxygen sensor. For this reason, it is possible to restrain the progress of the deterioration of the main catalyst. Therefore, the initial performance of the vehicle in connection with the exhaust gas purification can be maintained for a longer time. The fuel control includes control of an amount of fuel supplied to a combustion chamber.

As such, the initial performance of the vehicle in connection with the exhaust gas purification can be maintained for a longer time without increasing the size of the main catalyst, irrespective of the use of the downstream oxygen sensor. It is therefore possible to restrain the increase in size of the vehicle in the up-down direction while initial performances of the exhaust gas purification of the vehicle are maintained for a long time.

When viewed in the left-right direction, the center of the upstream end of the catalyst portion is positioned behind the linear line L and forward of the central axis of the crankshaft. At least a part of the catalyst portion is therefore provided straight below the engine main body when viewed in the left-right direction. The linear line L is a linear line which is orthogonal to the central axis of the cylinder hole and passes the central axis of the crankshaft when viewed in the left-right direction. Furthermore, the engine main body is provided so that the central axis of the cylinder hole is along the up-down direction. When the engine main body is provided in this way, it is easy to provide for a space straight below the engine main body, behind the linear line L, and forward of the central axis of the crankshaft. The catalyst portion can be provided in this space. It is therefore possible to restrain the increase in size of the vehicle in the up-down direction even when at least a part of the catalyst portion is provided straight below the engine main body.

Furthermore, the center of the upstream end of the catalyst portion is forward of and above the center of the downstream end of the catalyst portion. It is therefore possible to provide the catalyst portion by effectively utilizing the above-described space. It is therefore possible to further restrain the increase in size of the vehicle in the up-down direction. Furthermore, the increase in size of the vehicle in the front-rear direction is restrained when compared to cases where the center of the upstream end of the catalyst portion is provided forward of and at the same level as the center of the downstream end of the catalyst portion.

It is assumed that the cross-sectional area of the downstream end and its surroundings of the upstream collective exhaust passage member cut along the direction orthogonal to the flow direction of the exhaust gas is a cross-sectional area AU. Further, it is assumed that the cross-sectional area of the catalyst portion cut along the flow direction of the exhaust gas is a cross-sectional area AC. The cross-sectional area AU is smaller than the cross-sectional area AC. It is therefore possible to easily provide for a space around the downstream end and its surroundings of the upstream collective exhaust passage member. The upstream oxygen sensor can be provided by utilizing this space. The catalyst portion is provided so that the center of the upstream end is forward of and above the center of the downstream end. Due to this, as the upstream oxygen sensor is provided by utilizing this space, the increase in size of the vehicle in the front-rear direction is restrained while the upstream oxygen sensor is provided upstream of the catalyst portion.

It is assumed that the cross-sectional area of the upstream end and its surroundings of the downstream collective exhaust passage member cut along the direction orthogonal to the flow direction of the exhaust gas is a cross-sectional area AD. The cross-sectional area AD is smaller than the cross-sectional area AC. It is therefore possible to easily provide for a space around the upstream end and its surroundings of the downstream collective exhaust passage member. The downstream oxygen sensor can be provided by utilizing this space. The catalyst portion is provided so that the center of the upstream end is forward of and above the center of the downstream end. Due to this, as the downstream oxygen sensor is provided by utilizing this space, the increase in size of the vehicle in the front-rear direction is restrained while the downstream oxygen sensor is provided downstream of the catalyst portion.

The catalyst portion is provided downstream of the upstream collective exhaust passage member to which a plurality of independent exhaust passage members are connected. Due to this, the number of main catalysts is decreased when compared to cases where the main catalysts are provided for the respective independent exhaust passage members. It is therefore possible to restrain the increase in size of the vehicle in the up-down direction. Furthermore, the upstream oxygen sensor is provided on the upstream collective exhaust passage member. Due to this, the number of upstream oxygen sensors is decreased when compared to cases where the upstream oxygen sensors are provided for the respective independent exhaust passage members. It is therefore possible to restrain the increase in size of the vehicle in the up-down direction.

The straddled vehicle of the present teaching includes the following features. The controller is configured to determine purification capability of the main catalyst based on the signal from the downstream oxygen sensor. The straddled vehicle includes a notification means which is configured to perform a notification when the controller determines that the purification capability of the main catalyst has been lowered or reduced to a predetermined level.

According to this arrangement, the controller determines the purification capability of the main catalyst based on a signal from the downstream oxygen sensor. When the controller determines that the purification capability of the main catalyst has been lowered to a predetermined level, a notification is performed by the notification means. This makes it possible to notify the rider or the like of the replacement of the main catalyst before the deterioration of the main catalyst reaches a predetermined level. By means of the replacement of the main catalyst, the initial performance of the vehicle in connection with the exhaust gas purification is therefore maintained for a longer time by using a plurality of main catalysts.

The straddled vehicle of the present teaching preferably includes the following features. The engine unit includes a plurality of fuel suppliers configured to supply fuel to the respective combustion chambers. The controller is configured to control the fuel supply amounts of the fuel suppliers based on the signal from the upstream oxygen sensor and the signal from the downstream oxygen sensor.

According to this arrangement, the controller controls fuel supply amounts of the fuel suppliers based on the signal from the upstream oxygen sensor and the signal from the downstream oxygen sensor. Because the signal from the upstream oxygen sensor and the signal from the downstream oxygen sensor are used, the actual purification capability of the main catalyst is detected. Due to this, because the combustion control is executed based on the signals from the two oxygen sensors, the precision of the fuel control is improved when compared to cases where fuel control is executed based solely on the signal from the upstream oxygen sensor. For this reason, it is possible to restrain the progress of the deterioration of the main catalyst. Therefore, the initial performance of the vehicle in connection with the exhaust gas purification can be maintained for a longer time.

The straddled vehicle of the present teaching includes the following feature. When viewed in the flow direction of the exhaust gas passing the catalyst portion, at least a part of the downstream oxygen sensor overlaps the catalyst portion.

The cross-sectional area AD is smaller than the cross-sectional area AC, as described above. It is therefore possible to easily provide for a space around the upstream end and its surroundings of the downstream collective exhaust passage member. When viewed in the flow direction of the exhaust gas passing the catalyst portion, at least a part of the downstream oxygen sensor overlaps the catalyst portion. In other words, the downstream oxygen sensor is provided in the space around the upstream end and its surroundings of the downstream collective exhaust passage member. It is therefore possible to restrain the increase in size of the vehicle in the up-down direction while the downstream oxygen sensor is provided downstream of the catalyst portion.

Furthermore, when viewed in the flow direction of the exhaust gas passing the catalyst portion, at least a part of the downstream oxygen sensor overlaps the catalyst portion. For this reason, the downstream oxygen sensor is provided to be close to the catalyst portion. The oxygen density detected by the downstream oxygen sensor is therefore similar to the oxygen density of the exhaust gas reaching the downstream end of the main catalyst. The precision of the control by using the downstream oxygen sensor is therefore further improved. In other words, the detection accuracy of the deterioration is improved when the deterioration of the main catalyst is detected based on the signal from the downstream oxygen sensor. Due to this, one main catalyst can be used for a longer time. Therefore, by means of a plurality of main catalysts, the initial performance of the vehicle in connection with the exhaust gas purification is maintained for a longer time. Furthermore, the precision of the fuel control is further improved when the fuel control is performed based on signals from the upstream oxygen sensor and the downstream oxygen sensor. For this reason, it is possible to further restrain the progress of the deterioration of the main catalyst. Therefore, the initial performance of the vehicle in connection with the exhaust gas purification is maintained for a longer time.

The straddled vehicle of the present teaching preferably includes the following feature. When viewed in the flow direction of the exhaust gas passing the catalyst portion, at least a part of the upstream oxygen sensor overlaps the catalyst portion.

The cross-sectional area AU is smaller than the cross-sectional area AC, as described above. It is therefore possible to easily provide for a space around the downstream end and its surroundings of the upstream collective exhaust passage member. When viewed in the flow direction of the exhaust gas passing the catalyst portion, at least a part of the upstream oxygen sensor overlaps the catalyst portion. In other words, the upstream oxygen sensor is provided in the space around the downstream end of the upstream collective exhaust passage member and its surroundings. It is therefore possible to restrain the increase in size of the vehicle in the up-down direction while the upstream oxygen sensor is provided upstream of the below-engine catalyst portion.

Furthermore, when viewed in the flow direction of the exhaust gas passing the catalyst portion, at least a part of the upstream oxygen sensor overlaps the catalyst portion. For this reason, the upstream oxygen sensor is provided to be close to the catalyst portion. The oxygen density detected by the upstream oxygen sensor is therefore similar to the oxygen density of the exhaust gas reaching the upstream end of the main catalyst. The precision of the control by using the upstream oxygen sensor is therefore further improved. In other words, the precision of the fuel control based at least on a signal from the upstream oxygen sensor is further improved. For this reason, it is possible to further restrain the progress of the deterioration of the main catalyst. Therefore, the initial performance of the vehicle in connection with the exhaust gas purification is maintained for a longer time.

The straddled vehicle of the present teaching preferably includes the following features. The downstream collective exhaust passage member includes: a downstream exhaust passage member having an upstream end connected to the downstream end of the catalyst portion; and a muffler member including the atmosphere discharge port, the muffler member being connected to a downstream end of the downstream exhaust passage member, and the muffler member being configured to reduce noise generated by the exhaust gas. The downstream oxygen sensor is provided on the downstream exhaust passage member.

According to this arrangement, the downstream collective exhaust passage member includes the downstream exhaust passage member and the muffler member. The upstream end of the downstream exhaust passage member is connected to the downstream end of the catalyst portion. The muffler member is connected to the downstream end of the downstream exhaust passage member. The muffler member has the atmosphere discharge port. The muffler member is configured to reduce noise generated by the exhaust gas. The downstream oxygen sensor is provided on the downstream exhaust passage member. Due to this, the path length from the combustion chamber to the catalyst portion tends to be short when compared to cases where the downstream oxygen sensor is provided on the muffler member. For this reason, the temperature of the exhaust gas flowing into the main catalyst is increased. As a result, at the cold start of the engine unit, the time required to activate the deactivated main catalyst is shortened. Due to this, the exhaust gas purification performance of the main catalyst is improved.

The straddled vehicle of the present teaching preferably includes the following feature. The catalyst portion is disposed so that the flow direction of the exhaust gas flowing in the catalyst portion is closer to the front-rear direction than to the up-down direction when viewed in the left-right direction.

According to this arrangement, the catalyst portion is provided so that the flow direction of the exhaust gas flowing therein is closer to the horizontal direction than to the up-down direction. It is therefore possible to provide the catalyst portion by further effectively utilizing the space which is straight below the engine main body, behind the linear line L, and forward of the central axis of the crankshaft. It is therefore possible to further restrain the increase in size of the vehicle in the up-down direction.

The straddled vehicle of the present teaching preferably includes the following features. The engine main body includes: a crankcase member which is provided at a lower part of the engine main body and includes the crankshaft; and a cylinder portion which is connected to an upper end portion of the crankcase member and includes the cylinder holes and the combustion chambers. When viewed in the left-right direction, at least a part of the catalyst portion is provided straight below the crankcase member in the up-down direction.

According to this arrangement, the engine main body includes the crankcase member and the cylinder portion. The crankcase member is provided at a lower part of the engine main body. The crankcase member includes the crankshaft. The cylinder portion is connected to an upper end portion of the crankcase member. The cylinder portion includes the cylinder holes and the combustion chambers. When viewed in the left-right direction, at least a part of the catalyst portion is provided straight below the crankcase member. It is therefore possible to provide the catalyst portion by further effectively utilizing the space which is straight below the crankcase member, behind the linear line L, and forward of the central axis of the crankshaft. It is therefore possible to further restrain the increase in size of the vehicle in the up-down direction.

The straddled vehicle of the present teaching preferably includes the following feature. The crankcase member includes: a crankcase housing the crankshaft; and an oil pan connected to a lower end portion of the crankcase. When viewed in the left-right direction, the catalyst portion is provided so that an extension line of a border between the crankcase and the oil pan passes the catalyst portion.

According to this arrangement, the crankcase member includes the crankcase and the oil pan. When viewed in the left-right direction, the extension of the border line between the crankcase and the oil pan passes the catalyst portion. The crankcase houses the crankshaft. The oil pan is connected to a lower end portion of the crankcase. It is assumed that, when viewed in the left-right direction, the catalyst portion is provided straight or directly above the extension of the border line between the crankcase and the oil pan. In this case, the path length from the combustion chamber to the catalyst portion may be too short. When the path length from the combustion chamber to the catalyst portion is too short, the temperature of the exhaust gas flowing into the main catalyst may be too high. As a result, the main catalyst may deteriorate due to excessive heat. Due to this, when viewed in the left-right direction, because the catalyst portion is provided so that the extension of the border between the crankcase and the oil pan passes through the catalyst portion, the deterioration of the main catalyst due to excessive heating is prevented. Therefore, the initial performance of the vehicle in connection with the exhaust gas purification is maintained for a longer time. It is assumed that, when viewed in the left-right direction, the catalyst portion is provided straight below the extension of the border line between the crankcase and the oil pan. In this case, the lower end of the catalyst portion may be significantly below the lower end of the engine main body. In this case, it is necessary to increase the size of the vehicle in the up-down direction in order to provide for a sufficient distance between the catalyst portion and the ground. Due to this, when viewed in the left-right direction, because the catalyst portion is provided so that the extension of the border between the crankcase and the oil pan passes through the catalyst portion, the increase in size of the vehicle in the up-down direction is restrained.

The straddled vehicle of the present teaching includes the following feature. The catalyst portion is provided entirely forward of the central axis of the crankshaft in the front-rear direction.

According to this arrangement, the catalyst portion is provided entirely forward of the central axis of the crankshaft. It is therefore possible to provide the catalyst portion by further effectively utilizing the space which is straight below the engine main body, behind the linear line L, and forward of the central axis of the crankshaft. It is therefore possible to further restrain the increase in size of the vehicle in the up-down direction.
Due to this, the path length from the combustion chamber to the catalyst portion is short when compared to cases where a part of the catalyst portion is provided rearward of the central axis of the crankshaft. For this reason, the temperature of the exhaust gas flowing into the main catalyst is increased. As a result, at the cold start of the engine unit, the time required to activate the deactivated main catalyst is shortened. Due to this, the exhaust gas purification performance of the main catalyst is improved.

The straddled vehicle of the present teaching preferably includes the following feature. The exhaust device includes at least one downstream sub-catalyst which is provided in the downstream collective exhaust passage member to purify the exhaust gas.

According to this arrangement, the exhaust device includes at least one downstream sub-catalyst which is provided to purify the exhaust gas. At least one downstream sub-catalyst is provided in the downstream collective exhaust passage member. With the downstream sub-catalyst, when compared to cases where no downstream sub-catalyst is provided, the initial performance of the vehicle in connection with the exhaust gas purification is maintained for a longer time. Furthermore, when compared to cases where no downstream sub-catalyst is provided, the main catalyst is downsized while the exhaust gas purification performance is maintained. Due to this, the increase in size of the vehicle in the up-down direction is further restrained, while the initial performance of the vehicle in connection with the exhaust gas purification is maintained for a longer time.

The straddled vehicle of the present teaching preferably includes the following features. The engine main body includes internal exhaust passage members which connect the combustion chambers with upstream ends of the independent exhaust passage members, respectively. The engine unit includes at least one upstream sub-catalyst which is configured to purify the exhaust gas and is provided in at least one of the internal exhaust passage members, the independent exhaust passage members, and the upstream collective exhaust passage member.

According to this arrangement, the engine main body includes the internal exhaust passage members. The internal exhaust passage members connect the combustion chambers with the upstream ends of the independent exhaust passage members. The engine unit includes at least one upstream sub-catalyst for purifying the exhaust gas. The at least one upstream sub-catalyst is provided in at least one of the internal exhaust passage members, the independent exhaust passage members, and the upstream collective exhaust passage member. With the upstream sub-catalyst, when compared to cases where no upstream sub-catalyst is provided, the initial performance of the vehicle in connection with the exhaust gas purification is maintained for a longer time. Furthermore, when compared to cases where no upstream sub-catalyst is provided, the main catalyst is downsized while the exhaust gas purification performance is maintained. Due to this, the increase in size of the vehicle in the up-down direction is further restrained, while the initial performance of the vehicle in connection with the exhaust gas purification is maintained for a longer time.

The straddled vehicle of the present teaching preferably includes the following feature. At least a part of at least one of the independent exhaust passage members and the upstream collective exhaust passage member is formed of a multi-walled pipe which includes an inner pipe and at least one outer pipe covering the inner pipe.

According to this arrangement, at least a part of at least one of the independent exhaust passage members and the upstream collective exhaust passage member is formed of a multi-walled pipe. The multi-walled pipe includes an inner pipe and at least one outer pipe which covers the inner pipe. Because the passage member is formed of the multi-walled pipe, it is possible to restrain the decrease in temperature of the exhaust gas in the passage member. As a result, at the cold start of the engine unit, the time required to activate the deactivated main catalyst is shortened. Due to this, the exhaust gas purification performance of the main catalyst is further improved.

The straddled vehicle of the present teaching preferably includes the following feature. The catalyst portion includes: a cylindrical part which houses the main catalyst and is connected to the downstream end of the upstream collective exhaust passage member and the upstream end of the downstream collective exhaust passage member and a catalyst protector portion arranged to cover at least a part of the outer surface of the cylindrical part.

According to this arrangement, the catalyst portion includes the main catalyst, the cylindrical part, and the catalyst protector portion. The cylindrical part houses the main catalyst. The cylindrical part is connected to the downstream end of the upstream collective exhaust passage member and the upstream end of the downstream collective exhaust passage member. The catalyst protector portion covers at least a part of the outer surface of the cylindrical part. When the catalyst protector portion is provided, the heat keeping effect of the main catalyst is improved. As a result, at the cold start of the engine unit, the time required to activate the deactivated main catalyst is further shortened. Due to this, the exhaust gas purification performance of the main catalyst is further improved.

The straddled vehicle of the present teaching preferably includes the following features. The engine main body is provided with an oil filter at a front portion. When the exhaust device and the oil filter are viewed from the front side in the front-rear direction, the exhaust device and the oil filter are arranged so that at least a part of the oil filter is exposed.

According to this arrangement, the oil filter is provided at the front portion of the engine main body. When the exhaust device and the oil filter are viewed from the front side, at least a part of the oil filter is exposed. The oil filter is therefore easily detachable from the engine main body.

The straddled vehicle of the present teaching preferably includes the following features. The number of the catalyst portions is one.

The straddled vehicle of the present teaching preferably includes the following features. The number of the combustion chambers is four or more. The straddled vehicle includes a plurality of the catalyst portions. The exhaust device is configured so that only the exhaust gas discharged from one or some of the combustion chambers passes corresponding one of the catalyst portions.

### [Brief Description of Drawings]

[FIG. 1] FIG. 1 is a right side view of a motorcycle of an embodiment.
[FIG. 2] FIG. 2 is a cross-section taken along a line II-II in FIG. 1.
[FIG 3] FIG. 3 is a right side view of a part of an engine unit.
[FIG. 4] FIG. 4 is a front view of a part of the engine unit.
[FIG. 5] FIG. 5 is a schematic diagram of a part of the engine unit not covered by the present invention.
[FIG. 6] FIG. 6 is a schematic diagram of a part of the engine unit not covered by the present invention.
[FIG. 7] FIG. 7 is a control block diagram of the engine unit.
[FIG. 8] FIG. 8 is a cross-section of a muffler member not covered by the present invention.
[FIG. 9] FIG. 9 is a bottom view of a part of the engine unit.
[FIG. 10] FIG. 10 is a right side view of a part of an engine unit of Modification 1.
[FIG. 11] FIG. 11 is a right side view of a part of an engine unit of Modification 2 not covered by the present invention.
[FIG. 12] FIG. 12 is a cross-section of a turbocharger of Modification 2 not covered by the present invention.
[FIG. 13] FIG. 13 is a side view of the turbocharger of Modification 2 not covered by the present invention.
[FIG. 14] FIG. 14 is a schematic diagram showing an exhaust device of a modification not covered by the present invention.
[FIG. 15] FIG. 15 is a right side view of a part of an engine unit of another modification
[FIG. 16] FIG. 16 is a cross-section of an upstream exhaust passage member of another modification not covered by the present invention.
[FIG. 17] FIG. 17 is a front view of a part of the engine unit of another modification not covered by the present invention.

### [Description of Embodiments]

The following will describe an embodiment of the present invention. The present embodiment is an example in which a straddled vehicle of the present teaching is embodied as a sports-type motorcycle. Hereinafter, a front-rear direction is a vehicle front-rear direction for a rider seated on a below-described seat 9 of a motorcycle 1. A left-right direction is a vehicle left-right direction for the rider seated on the seat 9. The vehicle left-right direction is identical to a vehicle width direction. In each figure, arrows F and B indicate forward and backward, respectively, arrows L and R indicate leftward and rightward, respectively, and arrows U and D indicate upward and downward, respectively. The present embodiment is described based on the definition of terms described at the end of this specification. The same applies to later-described modifications, wherein modification 1 is covered and modication 2 is not covered by the present invention.

### [Overall Structure of Motorcycle]

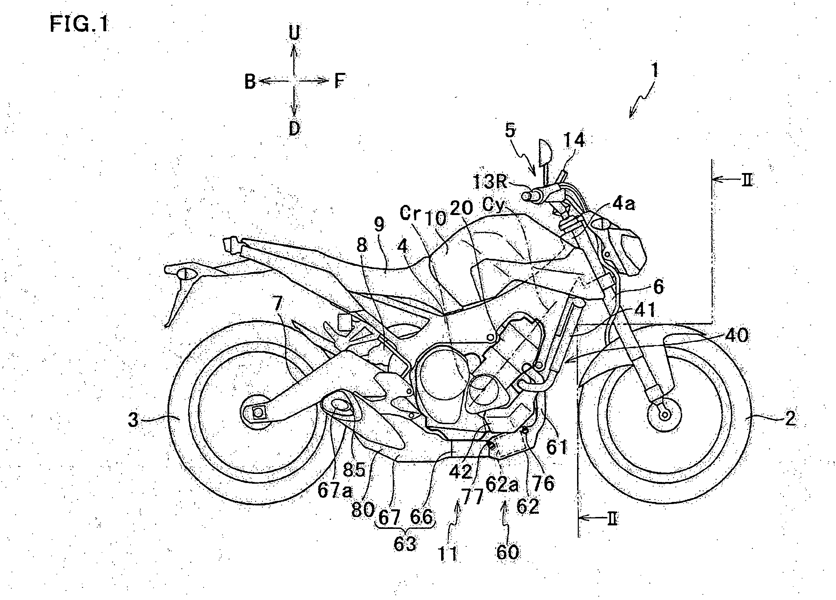

As shown in FIG. 1, the motorcycle 1 is provided with a front wheel unit 2, a rear wheel unit 3, and a vehicle body frame 4. The vehicle body frame 4 includes a head pipe 4a at a front portion. A steering shaft (not illustrated) is rotatably inserted into the head pipe 4a. An upper end portion of the steering shaft is connected to a handle unit 5. An upper end portion of a pair of front forks 6 is fixed to the handle unit 5. The lower end portions of the front forks 6 support the front wheel unit 2. The front forks 6 are configured to absorb shocks in the up-down direction. The front wheel unit 2 includes a single front wheel. An upper part of the front wheel unit 2 is covered with a fender. This fender is not included in the front wheel unit 2.

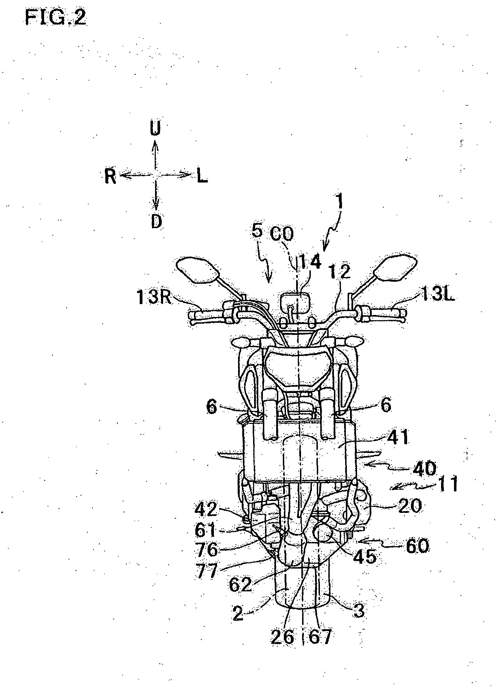

As shown in FIG. 2, the handle unit 5 includes a single handlebar 12 which extends in the left-right direction. Grips 13L and 13R are provided at left and right ends of the handlebar 12, respectively. The left grip 13R is a throttle grip for adjusting the output of the engine. A display 14 is attached to the handlebar 12. Although not illustrated, the display 14 displays vehicle speed, engine rotation speed, and the like. A warning lamp is provided on the display 14. Furthermore, switches are provided on the handlebar 12.

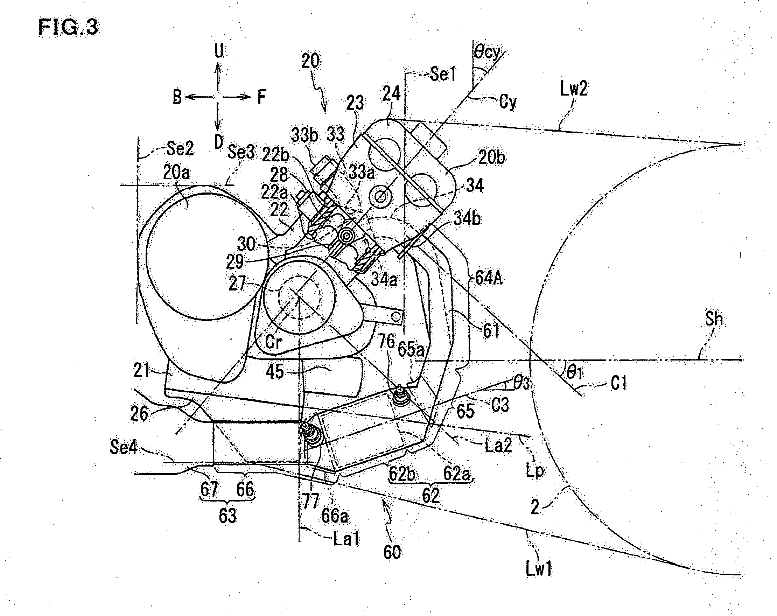

As shown in FIG. 1, a pair of swingarms 7 is swingably supported by the vehicle body frame 4. The rear end portions of the swingarms 7 support the rear wheel unit 3. The rear wheel unit 3 includes a single rear wheel. One end portion of a rear suspension 8 is attached to a part of each swingarm 7, which is rearward of the swing center. The other end portion of the rear suspension 8 is attached to the vehicle body frame 4. The rear suspension 8 is configured to absorb shocks in the up-down direction. FIG. 1, FIG 2, and later-described FIG. 3 show a state in which the front forks 6 and the rear suspension 8 are maximally elongated in the up-down direction. In other words, the vehicle body frame 4 is at the highest relative to the front wheel unit 2 and the rear wheel unit 3.

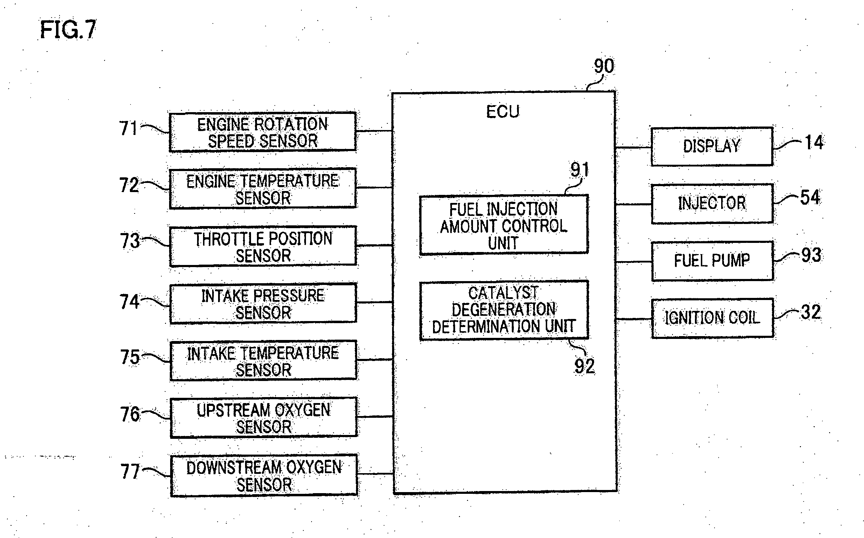

The vehicle body frame 4 supports the seat 9 and the fuel tank 10. The fuel tank 10 is provided in front of the seat 9. The vehicle body frame 4 supports the engine unit 11. The engine unit 11 may be directly or indirectly connected to the vehicle body frame 4. The engine unit 11 is provided straight below the fuel tank 10. The engine unit 11 is provided below the upper end of the seat 9. The front wheel unit 2 is provided in front of the engine unit 11 when viewed in the left-right direction. The rear wheel unit 3 is provided behind the engine unit 11 when viewed in the left-right direction. As shown in FIG. 2, the width in the left-right direction of the engine unit 11 is longer than the width in the left-right direction of the front wheel unit 2. The width in the left-right direction of the engine unit 11 is longer than the width in the left-right direction of the rear wheel unit 3. In this specification, the width in the left-right direction indicates the maximum length in the left-right direction. The vehicle body frame 4 supports a battery (not illustrated). The battery supplies electric power to electronic devices such as sensors and an ECU 90 (see FIG. 7) for controlling the engine unit 11.

### [Structure of Engine Unit]

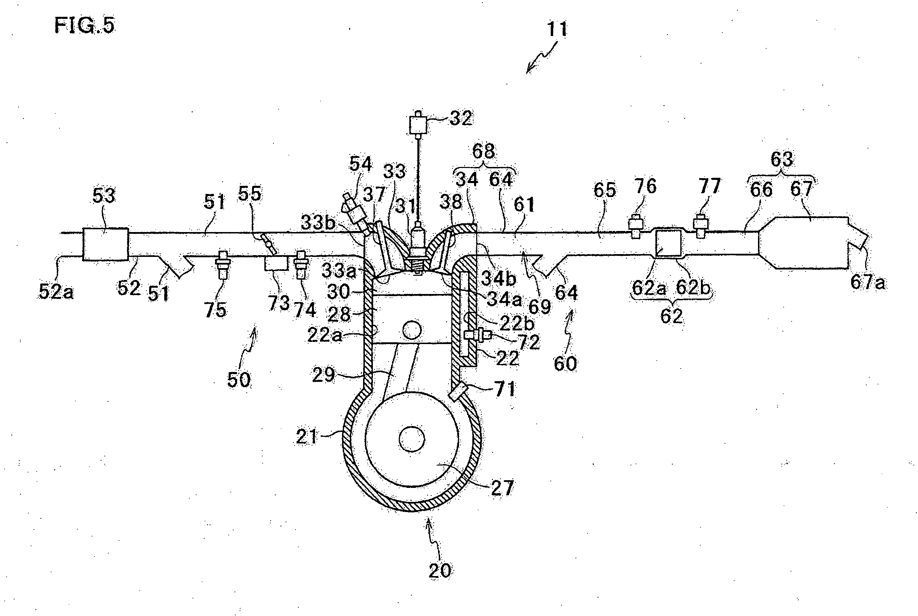

As shown in FIG 1, the engine unit 11 includes an engine main body 20, a water cooling device 40, and an exhaust device 60. As shown in FIG. 5, the engine unit 11 further includes an intake device 50. The engine main body 20 is connected to the water cooling device 40, the intake device 50, and the exhaust device 60. The engine unit 11 is a two-cylinder engine including 2 cylinders. The engine unit 11 is a 4-stroke engine. The 4-stroke engine repeats an intake process, a compression process, a combustion process (expansion process), and an exhaust process. The combustion process in the two-cylinder engine is performed at different timings in the respective two cylinders. FIG. 5 shows only one of the two cylinders of the engine main body 20 and does not show the remaining cylinder.

The engine unit 11 is a water-cooled engine. The engine main body 20 is cooled by coolant water. To the water cooling device 40, hot coolant water having absorbed heat from the engine main body 20 is supplied from the engine main body 20. The water cooling device 40 decreases the temperature of the coolant water supplied from the engine main body 20 and returns the coolant water to the engine main body 20. The water cooling device 40 includes a radiator 41, a radiator fan (not illustrated), and a reserve tank 42. The radiator 41 is provided in front of an upper part of the engine main body 20. The radiator fan is provided between the engine main body 20 and the radiator 41. The reserve tank 42 is provided in front of a lower part of the engine main body 20. The reserve tank 42 is provided in front of a right part of the engine main body 20. The reserve tank 42 may not be provided in front of a right part of the engine main body 20. The engine unit 11 includes a water pump (not illustrated) for circulating the coolant water. This water pump is provided in the engine main body 20.

### [Structure of Engine Main Body]

As shown in FIG. 3, the engine main body 20 includes a crankcase member 20a and a cylinder portion 20b. The crankcase member 20a is provided at a lower part of the engine main body 20. The cylinder portion 20b is provided at an upper part of the engine main body 20. The cylinder portion 20b is connected to an upper end portion of the crankcase member 20a.

The crankcase member 20a includes a crankcase 21 and an oil pan 26. The crankcase member 20a is further provided with a crankshaft 27 housed in the crankcase 21. Although not illustrated, the crankcase member 20a includes a transmission, a clutch, a starter motor, and a power generator. These members are also housed in the crankcase 21. Hereinafter, the central axis Cr of the crankshaft 27 is referred to as a crankshaft axis Cr. The crankshaft axis Cr is along the left-right direction. To be more specific, the crankshaft axis Cr is in parallel to the left-right direction.

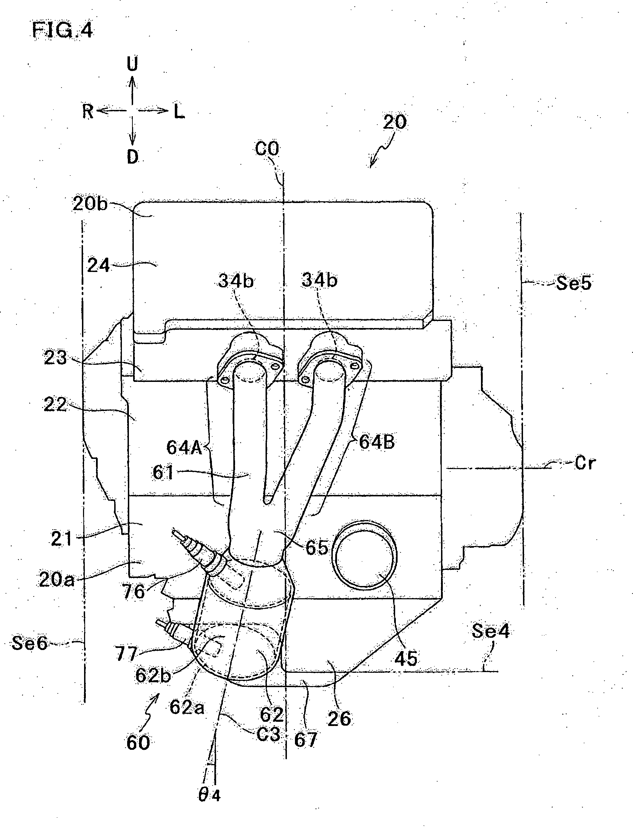

The oil pan 26 is provided at a lower part of the crankcase member 20a. The oil pan 26 is connected to a lower end of the crankcase 21. When viewed in the left-right direction, the border between the oil pan 26 and the crankcase 21 is substantially a linear line. When viewed in the left-right direction, an extension of the border between the oil pan 26 and the crankcase 21 is referred to as a linear line Lp. The linear line Lp is along the front-rear direction. The linear line Lp is inclined with a negative slope in the forward direction. The linear line Lp may orthogonally intersect with a later-described cylinder axial line Cy. As shown in FIG. 4, a right part of the oil pan 26 is dented. In other words, the right part of the oil pan 26 is above the left part of the oil pan 26. A part of the exhaust device 60 is provided in the dent of the oil pan 26. The oil pan 26 stores lubrication oil. The crankcase member 20a includes an oil pump (not illustrated) which is configured to suck the lubrication oil stored in the oil pan 26.

As shown in FIG. 4, an oil filter 45 is provided at a front portion of the crankcase member 20a. It is assumed that a plane which passes the center in the left-right direction of the front wheel unit 2 and the rear wheel unit 3 is C0. The center in the left-right direction of the front wheel unit 2 and the rear wheel unit 3 is the center in the left-right direction of the motorcycle 1. Hereinafter, the center in the left-right direction of the motorcycle 1 will be referred to as the center C0 in the left-right direction of the motorcycle 1. The oil filter 45 is provided to the left of the center C0 in the left-right direction of the motorcycle 1. The oil filter 45 protrudes forward from the front surface of the crankcase 21. A filter main body (not illustrated) is provided inside the oil filter 45. The filter main body is configured to remove foreign matter in the lubrication oil. In consideration of the replacement of the filter main body, the oil filter 45 is arranged to be detachable from the crankcase 21.

As shown in FIG. 3, the cylinder portion 20b includes a cylinder body 22, a cylinder head 23, and a head cover 24. The cylinder body 22 is connected to an upper end portion of the crankcase 21. The cylinder head 23 is connected to an upper end portion of the cylinder body 22. The head cover 24 is connected to an upper end portion of the cylinder head 23.

As shown in FIG. 3 and FIG. 5, cylinder holes 22a are formed in the cylinder body 22. Two cylinder holes 22a are formed in the cylinder body 22. The two cylinder holes 22a are side by side in the left-right direction. A piston 28 is slidably housed in each cylinder hole 22a. The two pistons 28 are connected to a single crankshaft 27 via two connecting rods 29. Around the two cylinder holes 22a, a cooling passage 22b is formed to allow the coolant water to flow therein.

Hereinafter, the central axis Cy of the cylinder hole 22a is referred to as a cylinder axial line Cy. The two cylinder axial lines Cy are in parallel to one another. When viewed in the left-right direction, the two cylinder axial lines Cy overlap. As shown in FIG. 3, the cylinder axial lines Cy do not intersect with the crankshaft axis Cr. The cylinder axial lines Cy may intersect with the crankshaft axis Cr. The cylinder axial lines Cy are along the up-down direction. When viewed in the left-right direction, each cylinder axial line Cy is inclined in the front-rear direction with respect to the up-down direction. The cylinder axial line Cy is inclined so that the cylinder portion 20b is inclined forward. In other words, the cylinder axial line Cy is inclined with a positive slope in the forward direction. When viewed in the left-right direction, an inclination angle of the cylinder axial line Cy with respect to the up-down direction is termed an inclination angle θcy. The inclination angle θcy is not limited to the angle shown in FIG. 3. The inclination angle θcy is 0 degrees or greater than 0 degrees and 45 degrees or less than 45 degrees.

As shown in FIG. 3 and FIG. 5, combustion chambers 30 are formed in the cylinder portion 20b. Two combustion chambers 30 are formed in the cylinder portion 20b. The two combustion chambers 30 are side by side in the left-right direction. Each combustion chamber 30 is formed of the lower surface of the cylinder head 23, the cylinder hole 22a, and the upper surface of the piston 28. In other words, a part of the combustion chamber 30 is formed by the inner surface of the cylinder hole 22a. As shown in FIG. 3, it is assumed that a linear line which passes the crankshaft axis Cr and is in parallel to the up-down direction when viewed in the left-right direction is a linear line La1. When viewed in the left-right direction, the two combustion chambers 30 are provided in front of the linear line La1. In other words, when viewed in the left-right direction, the two combustion chambers 30 are provided forward of the crankshaft axis Cr.

A leading end portion of an ignition plug 31 is provided in the combustion chamber 30, as shown in FIG. 5. Spark discharge occurs at the leading end portion of the ignition plug 31. With this spark discharge, air-fuel mixture in the combustion chamber 30 is ignited. In this specification, the air-fuel mixture indicates a mixture of air and fuel. The ignition plug 31 is connected to an ignition coil 32. The ignition coil 32 stores electric power to cause spark discharge of the ignition plug 31. The ignition plug 31 and the ignition coil 32 constitute an ignition device.

Internal intake passage members 33 and internal exhaust passage members 34 are formed in the cylinder head 23. In this specification, a passage member is a structure forming a path. A path is a space through which gas or the like passes. The internal intake passage member 33 is connected to the combustion chamber 30. The internal intake passage member 33 is provided for each combustion chamber 30. The internal exhaust passage member 34 is connected to the combustion chamber 30. The internal exhaust passage member 34 is provided for each combustion chamber 30. The internal intake passage member 33 is provided to introduce air into the combustion chamber 30. The internal exhaust passage member 34 is provided to discharge the exhaust gas generated in the combustion chamber 30 from the combustion chamber 30.

A combustion chamber intake port 33a and a combustion chamber exhaust port 34a are formed in surfaces of the cylinder head 23 which form the combustion chamber 30. The combustion chamber intake port 33a is at the downstream end of the internal intake passage member 33. The combustion chamber exhaust port 34a is at the upstream end of the internal exhaust passage member 34. Intake ports 33b and exhaust ports 34b are formed in an outer surface of the cylinder head 23. The intake port 33b is at the upstream end of the internal intake passage member 33. The exhaust port 34b is at the downstream end of the internal exhaust passage member 34. The number of combustion chamber intake ports 33a provided for one combustion chamber 30 may be one, two, or more than two. The number of intake ports 33b is only one for one combustion chamber 30. For example, when two combustion chamber intake ports 33a are provided for one combustion chamber 30, the internal intake passage member 33 is formed to be branched into two. The number of combustion chamber exhaust ports 34a provided for one combustion chamber 30 may be one, two, or more than two. The number of exhaust ports 34b is only one for one combustion chamber 30. As shown in FIG. 3, the intake ports 33b are formed in the front surface of the cylinder head 23. The exhaust ports 34b are formed in the front surface of the cylinder head 23. As shown in FIG. 4, the two exhaust ports 34b are arranged to be side by side along the left-right direction.

As shown in FIG. 5 which is not covered by the present invention, in the internal intake passage member 33, an intake valve 37 is provided to open and close the combustion chamber intake port 33a. The intake valve 37 is provided for each combustion chamber intake port 33a. In the internal exhaust passage member 34, an exhaust valve 38 is provided to open and close the combustion chamber exhaust port 34a. The exhaust valve 38 is provided for each combustion chamber exhaust port 34a. The intake valve 37 and the exhaust valve 38 are driven by a valve driving device (not illustrated) housed in the cylinder head 23. The valve driving device operates in sync with the crankshaft 27. The valve driving device may include a variable valve timing device. A known device is used as the variable valve timing device. The variable valve timing device is configured to change the timings to open and close the intake valve and/or the exhaust valve.

The engine main body 20 includes injectors 54. Each injector 54 is a fuel supplier configured to supply fuel to the combustion chamber 30. The injector 54 is provided for each combustion chamber 30. The injector 54 is positioned to inject fuel in the internal intake passage member 33. The injector 54 is connected to the fuel tank 10. A fuel pump 93 (see FIG. 7) is provided inside the fuel tank 10. The fuel pump 93 supplies fuel in the fuel tank 10 to the injector 54 with a pressure. The injector 54 may be positioned to inject fuel in the combustion chamber 30. Alternatively, the injector 54 may be positioned to inject fuel in a later-described branched intake passage member 51 of the intake device 50. The engine main body 20 may include a carburetor as a fuel supplier instead of the injector 54. The carburetor is configured to supply fuel into the combustion chamber 30 by utilizing a negative pressure in the combustion chamber 30.

The engine main body 20 includes an engine rotation speed sensor 71 and an engine temperature sensor 72. The engine rotation speed sensor 71 detects the rotation speed of the crankshaft 27, i.e., the engine rotation speed. The engine temperature sensor 72 detects the temperature of the engine main body 20. In the present example, the engine temperature sensor 72 indirectly detects the temperature of the cylinder body 22 by detecting the temperature of the coolant water in the cooling passage 22b. The engine temperature sensor 72 may directly detect the temperature of the cylinder body 22.

### [Structure of Intake Device]

The intake device 50 includes one intake passage member 52 and two branched intake passage members 51. The intake passage member 52 is provided with an atmosphere suction port 52a which is exposed to the atmosphere. The atmosphere suction port 52a is at the upstream end of the intake passage member 52. The intake passage member 52 is provided with an air cleaner 53 configured to purify air. The downstream end of the intake passage member 52 is connected to the upstream ends of the two branched intake passage members 51. The downstream ends of the two branched intake passage members 51 are connected to the two intake ports 33b formed in the rear surface of the cylinder head 23, respectively. The atmosphere suction port 52a sucks air from the atmosphere. The air flowing into the intake passage member 52 through the atmosphere suction port 52a is supplied to the engine main body 20 via the two branched intake passage members 51.

A throttle valve 55 is provided in the branched intake passage member 51. One throttle valve 55 is provided for each combustion chamber 30. The opening degree of the throttle valve 55 is changed as the rider rotationally operates the throttle grip 13R.

A throttle position sensor 73, an intake pressure sensor 74, and an intake temperature sensor 75 are provided in each branched intake passage member 51. The throttle position sensor 73 detects the position of the throttle valve 55 and outputs a signal indicating a throttle opening degree. The throttle opening degree indicates the opening degree of the throttle valve 55. The intake pressure sensor 74 detects an internal pressure of the branched intake passage member 51. The intake temperature sensor 75 detects the temperature of air in the branched intake passage member 51.

### [Structure of Exhaust Device]

As shown in FIG. 5, the exhaust device 60 includes an upstream exhaust passage member 61, a catalyst portion (catalytic converter) 62, and a downstream collective exhaust passage member 63. Hereinafter, the upstream and downstream in the flow direction of exhaust gas of the exhaust device 60 and the internal exhaust passage member 34 will be simply referred to as upstream and downstream. The upstream exhaust passage member 61 includes two independent exhaust passage members 64 and an upstream collective exhaust passage member 65. One independent exhaust passage member 64 is provided for each combustion chamber 30. The downstream collective exhaust passage member 63 includes a downstream exhaust passage member 66 and a muffler member 67. The upstream ends of the two independent exhaust passage members 64 are connected to the two exhaust ports 34b formed in the front surface of the cylinder head 23, respectively. The downstream ends of the two independent exhaust passage members 64 are connected to the upstream end of the upstream collective exhaust passage member 65. The upstream collective exhaust passage member 65 gathers (merges) flows of the exhaust gas discharged from the two independent exhaust passage members 64. The downstream end of the upstream collective exhaust passage member 65 is connected to the upstream end of the catalyst portion 62. The catalyst portion 62 includes a main catalyst 62a which is configured to purify exhaust gas. The downstream end of the catalyst portion 62 is connected to the upstream end of the downstream exhaust passage member 66. The downstream end of the downstream exhaust passage member 66 is connected to the upstream end of the muffler member 67. The muffler member 67 has an atmosphere discharge port 67a exposed to the atmosphere. The exhaust gas discharged from the two exhaust ports 34b of the engine main body 20 passes the upstream exhaust passage member 61 and flows into the catalyst portion 62. After the exhaust gas is purified while passing through the main catalyst 62a, the exhaust gas passes the downstream collective exhaust passage member 63 and is discharged from the atmosphere discharge port 67a. The independent exhaust passage member 64 is equivalent to an independent exhaust passage member of the present teaching.

A passage member including the internal exhaust passage member 34 and the independent exhaust passage member 64 will be referred to as an independent exhaust passage member 68. One independent exhaust passage member 68 is provided for each combustion chamber 30. Furthermore, a passage from the combustion chamber 30 to the atmosphere discharge port 67a will be referred to as an exhaust path 69. The engine unit 11 is provided with two exhaust paths 69. The exhaust path 69 is a space in which the exhaust gas discharged from one combustion chamber 30 passes. The exhaust path 69 is formed of the independent exhaust passage member 68, the upstream collective exhaust passage member 65, the catalyst portion 62, and the downstream collective exhaust passage member 63. To put it differently, the exhaust path 69 is formed of the internal exhaust passage member 34, the upstream exhaust passage member 61, the catalyst portion 62, and the downstream collective exhaust passage member 63.

The following will describe the exhaust device 60 in a further detailed manner. As shown in FIG. 4, the two independent exhaust passage members 64A and 64B are arranged to be side by side along the left-right direction. The independent exhaust passage member 64A is provided to the right of the independent exhaust passage member 64B. The independent exhaust passage members 64 collectively indicate the independent exhaust passage members 64A and 64B. Each of the two independent exhaust passage members 64 includes at least one bended portion. The two independent exhaust passage members 64 have the bended portions so that the difference in path length between the two independent exhaust passage members 64 is small. At least one of the bended portions of one independent exhaust passage member 64 is bended when viewed in the left-right direction. At least one of the bended portions of one independent exhaust passage member 64 is bended when viewed in the front-rear direction. At the upstream ends of the two independent exhaust passage members 64, the flow directions of the exhaust gas are in parallel to one another.

As shown in FIG. 3, when viewed in the left-right direction, at the upstream ends of the two independent exhaust passage members 64, the flow directions of the exhaust gas are forward and obliquely downward. It is assumed that an axial line passing the center of the upstream end of an independent exhaust passage member 64A when viewed in the left-right direction is a central axis C1. The direction of the central axis C1 is identical to the flow direction of the exhaust gas at the upstream end of the independent exhaust passage member 64A. An inclination angle of the central axis C1 with respect to the front-rear direction is referred to as an inclination angle θ1. The inclination angle θ1 is not limited to the angle shown in FIG. 3. The inclination angle θ1 is 0 degrees or greater than 0 degrees and 45 degrees or less than 45 degrees. The central axis C1 therefore is along the front-rear direction. In other words, when viewed in the left-right direction, at the upstream ends of the two independent exhaust passage members 64, the flow directions of the exhaust gas are along the front-rear direction.

When viewed in the left-right direction, the flow directions of the exhaust gas at the downstream ends of the two independent exhaust passage members 64 are obliquely rearward and downward. When viewed in the left-right direction, at the downstream ends of the two independent exhaust passage members 64, the flow directions of the exhaust gas are along the up-down direction. To be more specific, when viewed in the left-right direction, at the downstream ends of the two independent exhaust passage members 64, the flow directions of the exhaust gas are along the downward direction.

The upstream collective exhaust passage member 65 includes an upstream bended portion 65a. The upstream bended portion 65a is bended when viewed in the left-right direction. Due to this, when viewed in the left-right direction, the flow direction of exhaust gas is along the up-down direction at the part of the upstream collective exhaust passage member 65, which is upstream of the upstream bended portion 65a. When viewed in the left-right direction, the flow direction of exhaust gas is along the left-right direction at the part of the upstream collective exhaust passage member 65, which is downstream of the upstream bended portion 65a. The upstream bended portion 65a changes the flow direction of the exhaust gas flowing therein, from the direction along the up-down direction to the direction along the front-rear direction.

The center of the upstream end of the catalyst portion 62 is forward of and above the center of the downstream end of the catalyst portion 62 when viewed in the left-right direction. In other words, when viewed in the left-right direction, the flow direction of the exhaust gas flowing in the catalyst portion 62 is obliquely rearward and downward. The central axis of the catalyst portion 62 is referred to as a central axis C3. When viewed in the left-right direction, the central axis C3 is inclined in the up-down direction with respect to the front-rear direction. When viewed in the left-right direction, an inclination angle of the central axis C3 with respect to the front-rear direction is termed as θ3. The inclination angle θ3 is not limited to the angle shown in FIG. 3. The inclination angle θ3 is greater than 0 degrees. The inclination angle θ3 is 45 degrees or less than 45 degrees. Therefore, when viewed in the left-right direction, the central axis C3 is along the front-rear direction. In other words, when viewed in the left-right direction, the flow direction of the exhaust gas flowing in the catalyst portion 62 is along the front-rear direction. When viewed in the left-right direction, the flow direction of the exhaust gas flowing in the catalyst portion 62 is close to the front-rear direction than to the up-down direction. The inclination angle θ3 may be greater than 45 degree. In other words, when viewed in the left-right direction, the flow direction of the exhaust gas flowing in the catalyst portion 62 may be along the up-down direction. The inclination angle θ3 is less than 90 degrees.

As shown in FIG. 4, when viewed in the front-rear direction, the central axis C3 of the catalyst portion 62 is inclined in the left-right direction with respect to the up-down direction. When viewed in the rearward direction, the central axis C3 of the catalyst portion 62 is inclined with a positive slope in the leftward direction. When viewed in the front-rear direction, an inclination angle of the central axis C3 with respect to the up-down direction is termed as θ4. The inclination angle θ4 is not limited to the angle shown in FIG. 4. The inclination angle θ4 is 0 degrees or greater than 0 degrees and 45 degrees or less than 45 degrees. Therefore, when viewed in the front-rear direction, the central axis C3 is along the up-down direction. In other words, when viewed in the front-rear direction, the flow direction of the exhaust gas flowing in the catalyst portion 62 is along the up-down direction. The inclination angle θ4 may be greater than 45 degree. In other words, when viewed in the front-rear direction, the flow direction of the exhaust gas flowing in the catalyst portion 62 may be along the left-right direction. When viewed in the rearward direction, the central axis C3 of the catalyst portion 62 may be inclined with a negative slope in the leftward direction. The inclination angle θ4 is 90 degrees or less than 90 degrees.

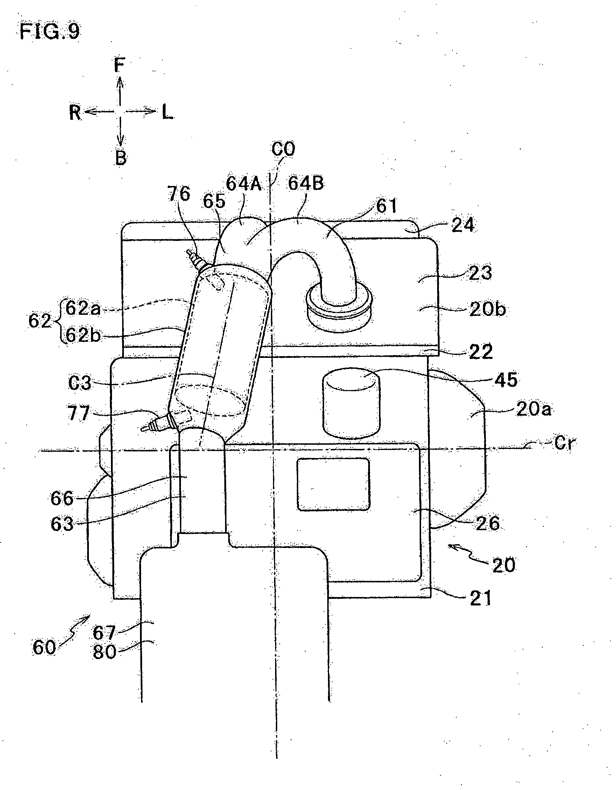

As shown in FIG. 9, when viewed in the up-down direction, the central axis C3 of the catalyst portion 62 is along the front-rear direction. That is to say, when viewed in the up-down direction, the central axis C3 of the catalyst portion 62 is closer to the front-rear direction than to the left-right direction. As described above, when viewed in the left-right direction, the central axis C3 of the catalyst portion 62 is along the front-rear direction. The flow direction of the exhaust gas flowing in the catalyst portion 62 is therefore along the front-rear direction. The flow direction of the exhaust gas flowing in the catalyst portion 62 may be along the left-right direction. The flow direction of the exhaust gas flowing in the catalyst portion 62 may be along the up-down direction. In such cases, the center of the upstream end of the catalyst portion 62 is forward of and above the center of the downstream end of the catalyst portion 62 when viewed in the left-right direction.

The downstream exhaust passage member 66 includes a downstream bended portion 66a. The downstream bended portion 66a is formed at an upstream end portion of the downstream exhaust passage member 66. The downstream bended portion 66a is bended when viewed in the left-right direction. The flow direction of the exhaust gas is substantially in parallel to the front-rear direction at a part of the downstream exhaust passage member 66, which is downstream of the downstream bended portion 66a. The downstream bended portion 66a changes the flow direction of the exhaust gas to a direction closer to the front-rear direction. The flow direction of the exhaust gas is substantially linear at the part of the downstream exhaust passage member 66, which is downstream of the downstream bended portion 66a.

The downstream end and its surroundings of the upstream collective exhaust passage member 65 are tapered so that the diameter increases downward. It is assumed that the cross-sectional area of the downstream end and its surroundings of the upstream collective exhaust passage member 65 cut along the direction orthogonal to the flow direction of the exhaust gas is a cross-sectional area A1 (not illustrated). Furthermore, it is assumed that the cross-sectional area of the catalyst portion 62 cut along the direction orthogonal to the flow direction of the exhaust gas is a cross-sectional area A2 (not illustrated). The cross-sectional area A1 is smaller than the cross-sectional area A2. The upstream end and its surroundings of the downstream exhaust passage member 66 is tapered so that the diameter decreases downward. It is assumed that the cross-sectional area of the upstream end and its surroundings of the downstream exhaust passage member 66 cut along the direction orthogonal to the flow direction of the exhaust gas is a cross-sectional area A3 (not illustrated). The cross-sectional area A3 is smaller than the cross-sectional area A2.

The upstream collective exhaust passage member 65 is provided in front of the engine main body 20. The upstream collective exhaust passage member 65 is provided in front of the crankcase member 20a. Alternatively, only a part of the upstream collective exhaust passage member 65 may be provided in front of the crankcase member 20a. At least a part of upstream collective exhaust passage member 65 is preferably provided in front of the crankcase member 20a. The upstream collective exhaust passage member 65 is provided below the crankshaft axis Cr.

When viewed in the front-rear direction, the upstream collective exhaust passage member 65 does not overlap the oil filter 45. When viewed in the front-rear direction, the upstream collective exhaust passage member 65 is provided to the right of the oil filter 45. When the exhaust device 60 and the oil filter 45 are viewed from the front side, the oil filter 45 is exposed. Due to this, the oil filter 45 is easily detachable from the engine main body 20. An operation to replace the oil filter 45 can therefore be easily done. When viewed in the front-rear direction, a part of the exhaust device 60 may overlap the oil filter 45. Even in such a case, the oil filter 45 is easily detachable when compared to cases where the entire oil filter 45 is hidden behind the exhaust device 60. When the exhaust device 60 and the oil filter 45 are viewed from the front side, at least a part of the oil filter 45 is preferably exposed.

The muffler member 67 is a device for reducing noise generated by exhaust gas. The muffler member 67 is supported by the vehicle body frame 4. To be more specific, a bracket (not illustrated) provided on the upper surface of the muffler member 67 is attached to the vehicle body frame 4. As shown in FIG. 1, the muffler member 67 includes an external cylinder 80 and a tail pipe 85. As shown in FIG. 9, the external cylinder 80 is formed by welding the left and right components.

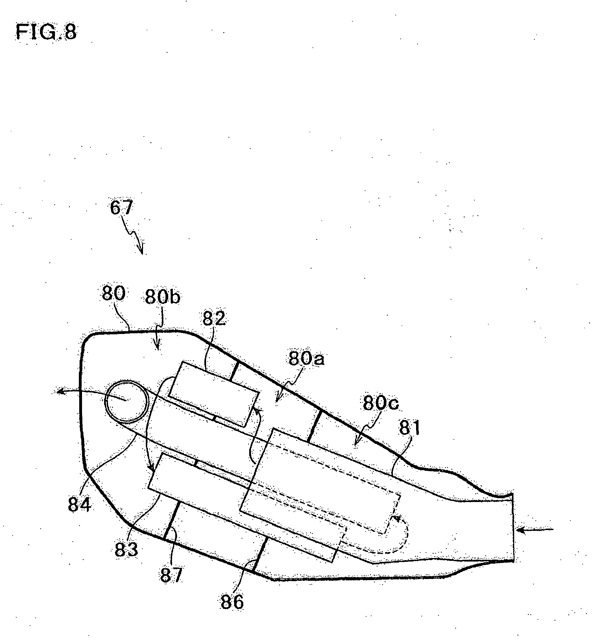

As shown in FIG. 8, the muffler member 67 includes four pipes 81 to 84 housed in the external cylinder 80. The inside of the external cylinder 80 is divided into three expansion chambers 80a, 80b, and 80c by two separators 86 and 87. An upstream end portion of the first pipe 81 may be integrally molded with a downstream end portion of the downstream exhaust passage member 66. The first pipe 81 allows the downstream exhaust passage member 66 to communicate with the central first expansion chamber 80a among the three expansion chambers. The second pipe 82 allows the first expansion chamber 80a to communicate with the second expansion chamber 80b behind the first expansion chamber 80a. The third pipe 83 allows the second expansion chamber 80b to communicate with the third expansion chamber 80c in front of the first expansion chamber 80a. The fourth pipe 84 allows the third expansion chamber 80c to communicate with the tail pipe 85 (see FIG 1). The fourth pipe 84 is bended inside the second expansion chamber 80b. The tail pipe 85 penetrates the right wall of the second expansion chamber 80b. In the second expansion chamber 80b, the tail pipe 85 is connected to the fourth pipe 84. The opening at the downstream end of the tail pipe 85 is the atmosphere discharge port 67a. The exhaust gas discharged from the downstream exhaust passage member 66 passes the first pipe 81, the first expansion chamber 80a, the second pipe 82, the second expansion chamber 80b, the third pipe 83, the third expansion chamber 80c, the fourth pipe 84, and the tail pipe 85 in this order. The exhaust gas is then discharged to the atmosphere through the atmosphere discharge port 67a. A sound absorbing material such as glass wool may or may not be provided between the inner surface of the external cylinder 80 and the outer surfaces of the four pipes 81 to 84. The internal structure of the muffler member 67 is not limited to the structure shown in FIG. 8.

Subsequently, the catalyst portion 62 is further detailed. As shown in FIG. 3, FIG. 4, and FIG. 9, the catalyst portion 62 includes the main catalyst 62a and the cylindrical part 62b. The cylindrical part 62b is connected to the downstream end of the upstream collective exhaust passage member 65 and the upstream end of the downstream exhaust passage member 66. The cylindrical part 62b may be integrally molded with a part of the upstream collective exhaust passage member 65. The cylindrical part 62b may be integrally molded with a part of the downstream exhaust passage member 66. The exhaust device 60 does not include catalysts other than the main catalyst 62a. The main catalyst 62a purifies the exhaust gas most in a plurality of exhaust paths 69 (see FIG. 5).

The main catalyst 62a is formed to be cylindrical. The main catalyst 62a has a porous structure. The porous structure indicates a structure in which through holes are formed along the flow direction of the exhaust gas. The main catalyst 62a is a three-way catalyst. The three-way catalyst removes three substances in exhaust gas, namely hydrocarbon (HC), carbon monoxide (CO), and nitrogen oxide (NOx), by oxidation or reduction. The three-way catalyst is a type of oxidation-reduction catalyst. The main catalyst 62a may be a catalyst which removes one or two of hydrocarbon, carbon monoxide, and nitrogen oxide. The main catalyst 62a may not be an oxidation-reduction catalyst. The main catalyst may be an oxidation catalyst which removes harmful substances only by oxidation. The main catalyst may be a reduction catalyst which removes harmful substances only by reduction. The main catalyst 62a includes a base and catalyst materials attached to the surface of the base. The catalyst materials are formed of a carrier and noble metals. The carrier has a function of attaching noble metals to a base. The noble metal has a function of purifying the exhaust gas. Examples of noble metals include platinum, palladium, and rhodium which remove hydrocarbon, carbon monoxide, and nitrogen oxide, respectively. When the temperature of the main catalyst 62a is lower than a predetermined temperature, the main catalyst 62a is inactive and does not exert the purification performance. When the temperature of the main catalyst 62a is equal to or higher than the predetermined temperature, the main catalyst 62a is active and exerts the purification performance. The main catalyst 62a may be a metal-base catalyst or a ceramic-base catalyst. The metal-base catalyst is a catalyst in which the base is made of metal. The ceramic-base catalyst is a catalyst in which the base is made of ceramic. The base of the metal-base catalyst is formed by, for example, alternately stacking metal corrugated plates and metal flat plates and winding them. The base of the ceramic-base catalyst is, for example, a honeycomb structure body.

The central axis C3 of the catalyst portion 62 is coaxial with the central axis of the main catalyst 62a. The central axis C3 of the catalyst portion 62 indicates the central axis of the cylindrical part 62b. The length in the flow direction of the exhaust gas of the catalyst portion 62 is identical to the length in the flow direction of the exhaust gas of the main catalyst 62a. The center of the upstream end of the main catalyst 62a is identical in position to the center of the upstream end of the catalyst portion 62. The center of the downstream end of the main catalyst 62a is identical in position to the center of the downstream end of the catalyst portion 62. The length in the flow direction of the exhaust gas of the catalyst portion 62 is termed a length Dc1 (not illustrated). Furthermore, the maximum length in the direction orthogonal to the flow direction of the exhaust gas of the catalyst portion 62 is termed Dc2 (not illustrated). The length Dc1 is longer than the length Dc2.

As shown in FIG. 3, when viewed in the left-right direction, the catalyst portion 62 is provided straight below the engine main body 20. A plane which passes the frontmost end of the crankcase member 20a and is orthogonal to the front-rear direction is termed a plane Se1. A plane which passes the rearmost end of the crankcase member 20a and is orthogonal to the front-rear direction is termed a plane Se2. The catalyst portion 62 is provided between the plane Se1 and the plane Se2. When viewed in the left-right direction, the catalyst portion 62 is provided straight below the crankcase member 20a. When viewed in the left-right direction, only a part of the catalyst portion 62 may be provided straight below the crankcase member 20a. At least a part of the catalyst portion 62 is preferably provided straight below the crankcase member 20a when viewed in the left-right direction. As shown in FIG. 3, a plane which passes the uppermost end of the crankcase member 20a and is orthogonal to the up-down direction is termed a plane Se3. A plane which passes the rearmost end of the crankcase member 20a and is orthogonal to the up-down direction is termed a plane Se4. At least a part of the catalyst portion 62 is provided between the plane Se3 and the plane Se4. When viewed in the left-right direction, at least a part of the catalyst portion 62 is provided in front of the crankcase member 20a. As shown in FIG. 4, a plane which passes the leftmost end of the engine main body 20 and is orthogonal to the left-right direction is termed a plane Se5. The plane Se5 passes the leftmost end of the crankcase member 20a. A plane which passes the rightmost end of the engine main body 20 and is orthogonal to the left-right direction is termed a plane Se6. The plane Se6 passes the rightmost end of the crankcase member 20a. The catalyst portion 62 is provided between the plane Se5 and the plane Se6. When viewed in the front-rear direction, at least a part of the catalyst portion 62 overlaps the crankcase member 20a. As shown in FIG. 9, when viewed in the up-down direction, at least a part of the catalyst portion 62 overlaps the crankcase member 20a. At least a part of the catalyst portion 62 is provided in front of the crankcase member 20a. At least a part of the catalyst portion 62 is provided in front of the oil pan 26. At least a part of a catalyst portion 62 is provided straight below the crankcase member 20a. The entirety or a part of the catalyst portion 62 may not be provided straight below the crankcase member 20a.

When viewed in the left-right direction, the center of the downstream end of the catalyst portion 62 is provided in front of the linear line La1. In other words, the center of the downstream end of the catalyst portion 62 is provided forward of the crankshaft axis Cr. As a matter of course, when viewed in the left-right direction, the center of the upstream end of the catalyst portion 62 is provided in front of the linear line La1. In other words, the center of the upstream end of the catalyst portion 62 is provided forward of the crankshaft axis Cr. When viewed in the left-right direction, the center of the downstream end of the catalyst portion 62 may be provided behind the linear line La1. In other words, the center of the downstream end of the catalyst portion 62 may be provided rearward of the crankshaft axis Cr.

A linear line which is orthogonal to the cylinder axial line Cy and passes the crankshaft axis Cr when viewed in the left-right direction is termed a linear line La2. When viewed in the left-right direction, the center of the upstream end of the catalyst portion 62 is provided behind (straight below) the linear line La2. As a matter of course, when viewed in the left-right direction, the center of the downstream end of the catalyst portion 62 is provided behind (straight below) the linear line La2. The catalyst portion 62 is provided below the crankshaft axis Cr. When viewed in the left-right direction, the catalyst portion 62 is provided in front of the cylinder axial line Cy.

When viewed in the left-right direction, the linear line Lp passes the catalyst portion 62. The linear line Lp is an extension of the border line between the crankcase 21 and the oil pan 26 when the engine unit 11 is viewed in the left-right direction.

As shown in FIG. 3, a line segment, which is the lowest one of line segments connecting points on the outline of the engine main body 20 with points on the outline of the front wheel unit 2 when viewed in the left-right direction, is referred to as a line segment Lw1. The line segment Lw1 connects the lowermost end of the engine main body 20 with a position in the vicinity of the lowermost end of the front wheel unit 2. When viewed in the left-right direction, the catalyst portion 62 is provided straight above the line segment Lw1. A line segment, which is the highest one of line segments connecting points on the outline of the engine main body 20 with points on the outline of the front wheel unit 2 when viewed in the left-right direction, is referred to as a line segment Lw2. The line segment Lw2 connects the uppermost end of the engine main body 20 with the uppermost end of the front wheel unit 2 or a position in the vicinity of the uppermost end of the front wheel unit 2. When viewed in the left-right direction, the catalyst portion 62 is provided straight below the line segment Lw2. When viewed in the left-right direction, the catalyst portion 62 is provided in a quadrangle having the line segment Lw1 and the line segment Lw2 as two sides. The quadrangle having the line segment Lw1 and the line segment Lw2 as two sides can be rephrased as a quadrangle in which apexes thereof are the ends of the line segment Lw1 and the ends of the line segment Lw2. When viewed in the left-right direction, the catalyst portion 62 is provided inside the above-described quadrangle and does not overlap the engine main body 20. In other words, when viewed in the left-right direction, the catalyst portion 62 is provided between the engine main body 20 and the front wheel unit 2. Alternatively, when viewed in the left-right direction, only a part of the catalyst portion 62 may be provided between the engine main body 20 and the front wheel unit 2. For example, when viewed in the left-right direction, a part of the catalyst portion 62 may overlap the engine main body 20. Furthermore, for example, a part of the catalyst portion 62 may be provided straight below the line segment Lw1 when viewed in the left-right direction. When viewed in the left-right direction, at least a part of the catalyst portion 62 is preferably provided between the engine main body 20 and the front wheel unit 2. When the front forks 6 and/or the rear suspension 8 expands and contracts, the relative position of the vehicle body frame 4 relative to the front wheel unit 2 is changed. The relative position of the engine unit 11 relative to the front wheel unit 2 is therefore changed. When viewed in the left-right direction, at least a part of the catalyst portion 62 is provided between the engine main body 20 and the front wheel unit 2 as described above. This, however, does not indicate that at least a part of the catalyst portion 62 is always provided in this way irrespective of the position of the engine unit 11 relative to the front wheel unit 2. This indicates that at least a part of the catalyst portion 62 is provided between the engine main body 20 and the front wheel unit 2 when viewed in the left-right direction when the position of the engine unit 11 is within a particular range relative to the front wheel unit 2.

As shown in FIG. 3, a horizontal plane passing the center of the front wheel unit 2 is termed a horizontal plane Sh. The catalyst portion 62 is provided below the horizontal plane Sh. Only a part of the catalyst portion 62 may be provided above the horizontal plane Sh. At least a part of the catalyst portion 62 is preferably provided below the horizontal plane Sh. This indicates that at least a part of the catalyst portion 62 is provided below the horizontal plane Sh when the position of the engine unit 11 is within a particular range relative to the front wheel unit 2.

As shown in FIG. 4, the catalyst portion 62 is disposed at a right part of the motorcycle 1. The center of the upstream end and the center of the downstream end of the catalyst portion 62 are not disposed at the center C0 in the left-right direction of the motorcycle 1. The center of the upstream end and the center of the downstream end of the catalyst portion 62 are to the right of the center C0 in the left-right direction of the motorcycle 1. When viewed in the front-rear direction, the catalyst portion 62 is provided to the right of the center C0 in the left-right direction of the motorcycle 1. When viewed in the front-rear direction, the catalyst portion 62 does not overlap the oil filter 45. When viewed in the front-rear direction, the catalyst portion 62 is provided to the right of the oil filter 45. When viewed in the front-rear direction, a part of the catalyst portion 62 may be disposed to the right of the center C0 in the left-right direction of the motorcycle 1 and the rest of the catalyst portion 62 may be disposed to the left of the center C0 in the left-right direction of the motorcycle 1.

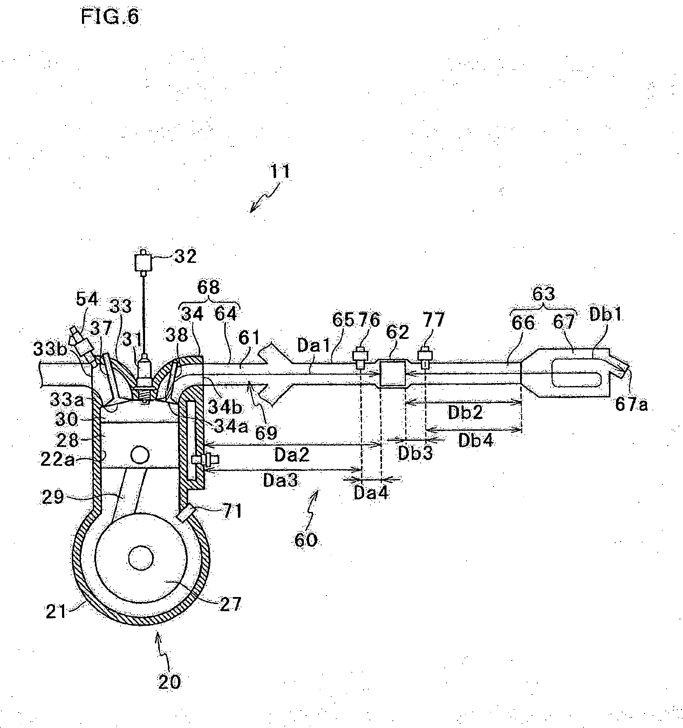

As shown in FIG. 6, an average of path lengths from the combustion chamber 30 to the upstream end of the catalyst portion 62 in the two exhaust paths 69 is termed a path length Da1. The path length from the downstream end of the catalyst portion 62 to the atmosphere discharge port 67a is termed a path length Db1. The path length Da1 is shorter than the path length Db1. An average of path lengths from the exhaust port 34b to the upstream end of the catalyst portion 62 in the three exhaust paths 69 is termed a path length Da2. The path length from the downstream end of the catalyst portion 62 to the upstream end of the muffler member 67 is termed a path length Db2. The path length Da1 is longer than the path length Db2. The path length Da2 is longer than the path length Db2. The path length Da2 may be shorter than the path length Db2. The path length Da1 may be shorter than the path length Db2. The path length in the expansion chamber of the muffler member 67 is defined as below. The path length in the first expansion chamber 80a from the downstream end of the first pipe 81 to the upstream end of the second pipe 82 is taken as an example. This path length is the length of the shortest path from the center of the downstream end of the first pipe 81 to the center of the upstream end of the second pipe 82. In other words, the path length in the expansion chamber in the muffler member 67 is the length of the path connecting the center of the inflow port of the expansion chamber with the center of the outflow port of the expansion chamber in the shortest distance.

As shown in FIG. 3 and FIG. 4, the exhaust device 60 includes an upstream oxygen sensor 76 and a downstream oxygen sensor 77. The upstream oxygen sensor 76 is provided on the upstream exhaust passage member 61. In other words, the upstream oxygen sensor 76 is provided upstream of the catalyst portion 62. The upstream oxygen sensor 76 is provided on the upstream collective exhaust passage member 65. The upstream oxygen sensor 76 is provided in the vicinity of the downstream end of the upstream collective exhaust passage member 65. The upstream oxygen sensor 76 is provided at a tapered portion of the upstream collective exhaust passage member 65. The upstream oxygen sensor 76 may be provided on at least one of the two independent exhaust passage members 64. The upstream oxygen sensor 76 may be provided on at least one of the two internal exhaust passage members 34.

The upstream oxygen sensor 76 is configured to detect the oxygen density in the exhaust gas in the upstream exhaust passage member 61. The upstream oxygen sensor 76 is configured to output a voltage signal corresponding to the oxygen density in the exhaust gas. The upstream oxygen sensor 76 is configured to output a high voltage level signal when the air-fuel ratio of the air-fuel mixture is rich, and to output a low voltage level signal when the air-fuel ratio is lean. The term "rich" indicates a state in which fuel is excessive when compared to the target air-fuel ratio. The term "lean" indicates a state in which air is excessive when compared to the target air-fuel ratio. In other words, the upstream oxygen sensor 76 is configured to detect whether the air-fuel ratio of the air-fuel mixture is rich or lean. The upstream oxygen sensor 76 may be a linear air/fuel ratio sensor ("linear A/F sensor"). The linear A/F sensor is configured to output a linear detection signal in proportion to the oxygen density in the exhaust gas. To put it differently, the linear A/F sensor continuously detects a change in the oxygen density of the exhaust gas. The upstream oxygen sensor 76 includes a sensor element formed of solid electrolyte which is mainly made of zirconia. The sensor element is activated when heated to a high temperature, thereby enabling the upstream oxygen sensor 76 to detect the oxygen density. The upstream oxygen sensor 76 may include a heater. At the cold start of the engine unit 11, the sensor element is heated by the heater. This shortens the time required to activate the deactivated sensor element. The cold start of the engine unit 11 indicates that the engine unit 11 is started in a state in which the temperature of the engine main body 20 is equal to or lower than the outside temperature.

As shown in FIG. 4, the upstream oxygen sensor 76 is provided at a right part of the upstream collective exhaust passage member 65. The leading end portion of the upstream oxygen sensor 76 is provided in the upstream collective exhaust passage member 65. When viewed in the direction along the flow direction of the exhaust gas passing the catalyst portion 62, a part of the upstream oxygen sensor 76 overlaps the catalyst portion 62. As shown in FIG 3, the upstream oxygen sensor 76 is provided rearward of the frontmost end of the catalyst portion 62. The upstream oxygen sensor 76 is provided in front of the engine main body 20. The upstream oxygen sensor 76 is provided in front of the crankcase member 20a. The upstream oxygen sensor 76 is provided in front of the plane Se1. In other words, the upstream oxygen sensor 76 is provided forward of the crankcase member 20a.

As shown in FIG. 6, an average of path lengths from the exhaust port 34b to the upstream oxygen sensor 76 in the two exhaust paths 69 is termed a path length Da3. Furthermore, the path length from the upstream oxygen sensor 76 to the upstream end of the catalyst portion 62 is referred to as a path length Da4. The path length Da3 is longer than the path length Db4. The path length Da3 may be shorter than the path length Da4.

As shown in FIG. 3 and FIG. 4, the downstream oxygen sensor 77 is provided on the downstream collective exhaust passage member 63. In other words, the downstream oxygen sensor 77 is provided downstream of the catalyst portion 62. The downstream oxygen sensor 77 is provided on the downstream exhaust passage member 66. The downstream oxygen sensor 77 may be provided on the muffler member 67. The downstream oxygen sensor 77 is configured to detect the oxygen density in the exhaust gas in the downstream exhaust passage member 66. The specific structure of the downstream oxygen sensor 77 is identical to that of the upstream oxygen sensor 76. The downstream oxygen sensor 77 may be a linear A/F sensor. The downstream oxygen sensor 77 may include a heater.

As shown in FIG. 4, the downstream oxygen sensor 77 is provided at a right part of the downstream exhaust passage member 66. The leading end portion of the downstream oxygen sensor 77 is provided in the downstream exhaust passage member 66. When viewed in the direction along the flow direction of the exhaust gas passing the catalyst portion 62, a part of the downstream oxygen sensor 77 overlaps the catalyst portion 62. The downstream oxygen sensor 77 is provided above the lowermost end of the catalyst portion 62. As shown in FIG. 3, when viewed in the left-right direction, the downstream oxygen sensor 77 is provided straight below the engine main body 20. When viewed in the left-right direction, the downstream oxygen sensor 77 is provided straight below the crankcase member 20a. As shown in FIG. 9, when viewed in the up-down direction, at least a part of the downstream oxygen sensor 77 overlaps the crankcase member 20a. The downstream oxygen sensor 77 is provided between the plane Se1 and the plane Se2. At least a part of the downstream oxygen sensor 77 is provided straight below the crankcase member 20a. At least a part of the downstream oxygen sensor 77 is provided straight below the oil pan 26.

As shown in FIG. 6, the path length from the downstream end of the catalyst portion 62 to the downstream oxygen sensor 77 is termed a path length Db3. The path length from the downstream oxygen sensor 77 to the upstream end of the muffler member 67 is referred to as a path length Db4. The path length Db3 is shorter than the path length Db4. The path length Db3 may be longer than the path length Db4.

### [Structure of ECU]

As shown in FIG. 7, the engine unit 11 includes an ECU 90 (Electronic Control Unit) as a controller for controlling operations of the engine unit 11. The ECU 90 is connected to sensors 71 to 77. The ECU 90 is further connected to an ignition coil 32, an injector 54, a fuel pump 93, a starter motor (not illustrated), a display 14, and the like. Based on signals from the sensors 71 to 76, etc., the ECU 90 controls the fuel pump 93 and the injector 54. With this, the ECU 90 controls a fuel injection amount and a fuel injection timing. The ECU 90 may or may not utilize a signal from the downstream oxygen sensor 77 for controlling the fuel injection amount and the fuel injection timing. The ECU 90 controls electric conduction to the ignition coil 32 based on signals from the sensors 71 to 76, etc. In this way, an ignition timing is controlled. The ignition timing indicates a timing at which the ignition plug 31 discharges electricity. The ECU 90 may or may not utilize a signal from the downstream oxygen sensor 77 for controlling the ignition timing. Furthermore, the ECU 90 controls electric conduction to the starter motor (not illustrated) so as to control the start of the engine unit 11.

The ECU 90 may include a single device or a plurality of devices which are positionally separated from one another. The ECU 90 includes members such as a CPU, a ROM, and a RAM. The CPU performs information processing based on programs and data stored in the ROM and the RAM. With this, the ECU 90 embodies functions of function processors. As the function processors, the ECU 90 includes, for example, a fuel injection amount control unit 91 and a catalyst degeneration determination unit 92.

The fuel injection amount control unit 91 controls the fuel injection amount of the injector 54. To be more specific, the fuel injection amount control unit 91 controls the time of fuel injection by the injector 54. The fuel injection amount can be rephrased as a fuel supply amount. To enhance the combustion efficiency and the efficiency in exhaust gas purification by the main catalyst 62a, it is preferable that the air-fuel ratio of the air-fuel mixture is equal to the stoichiometric air-fuel ratio. The fuel injection amount control unit 91 increases or decreases the fuel injection amount control unit according to need.

The following will describe an example of control of the fuel injection amount by the fuel injection amount control unit 91. Described is a case where the fuel injection amount control unit 91 controls the fuel injection amount by using a signal from the upstream oxygen sensor 76 and not using a signal from the downstream oxygen sensor 77. To begin with, the fuel injection amount control unit 91 calculates a basic fuel injection amount based on signals from an engine rotation speed sensor 71, an intake pressure sensor 74, a throttle position sensor 73, and an engine temperature sensor 72. To be more specific, the intake air amount is calculated by using the following two maps. The first map is a map in which a throttle opening degree and an engine rotation speed are associated with an intake air amount. The second map is a map in which an intake pressure and an engine rotation speed are associated with an intake air amount. Based on the intake air amount calculated based on the maps, a basic fuel injection amount with which a target air-fuel ratio is achieved is determined. When the throttle opening degree is small, the map in which an intake pressure and an engine rotation speed are associated with an intake air amount is used. When the throttle opening degree is great, the map in which a throttle opening degree and an engine rotation speed are associated with an intake air amount is used.

The fuel injection amount control unit 91 calculates a feedback correction value for correcting the basic fuel injection amount, based on a signal from the upstream oxygen sensor 76. To be more specific, based on a signal from the upstream oxygen sensor 76, it is determined whether the air-fuel mixture is lean or rich. When determining that the air-fuel mixture is lean, the fuel injection amount control unit 91 calculates the feedback correction value so that the next fuel injection amount is increased. Meanwhile, when determining that the air-fuel mixture is rich, the fuel injection amount control unit 91 calculates the feedback correction value so that the next fuel injection amount is decreased.

In addition to the above, the fuel injection amount control unit 91 calculates a correction value for correcting the basic fuel injection amount, based on the engine temperature, the outside temperature, the outside pressure, or the like. Furthermore, the fuel injection amount control unit 91 calculates a correction value in accordance with transient characteristics at acceleration and deceleration. The fuel injection amount control unit 91 calculates the fuel injection amount based on the basic fuel injection amount and the correction values such as the feedback correction value. Based on the fuel injection amount calculated in this way, the fuel pump and the injector 54 are driven and fuel is injected from the injector 54.

The fuel injection amount control unit 91 may control the fuel injection amount based on a signal of the upstream oxygen sensor 76 and a signal of the downstream oxygen sensor 77. To be more specific, the fuel injection amount control unit 91 may control the basic fuel injection amount based on a signal of the upstream oxygen sensor 76 and a signal of the downstream oxygen sensor 77. To be further specific, to begin with, in the same manner as in the embodiment above, the basic fuel injection amount is corrected based on a signal from the upstream oxygen sensor 76. The injector 54 injects fuel with the calculated fuel injection amount. The exhaust gas generated by the combustion of this fuel is detected by the downstream oxygen sensor 77. Then the basic fuel injection amount is corrected based on a signal of the downstream oxygen sensor 77. In this way, a deviation of the air-fuel ratio of the air-fuel mixture from a target air-fuel ratio is further restrained.

The catalyst degeneration determination unit 92 determines the purification capability of the main catalyst 62a based on a signal from the downstream oxygen sensor 77. To be specific, for example, the fuel injection amount control unit 91 controls the fuel injection amount so that the air-fuel mixture repeats a rich state and a lean state for a predetermined time (e.g., several seconds). The catalyst degeneration determination unit 92 determines the purification capability of the main catalyst 62a based on the degree of delay of a signal of the downstream oxygen sensor 77 from a change in the fuel injection amount. When the delay from the change is large, the catalyst degeneration determination unit 92 determines that the purification capability of the main catalyst 62a has become lower than a predetermined level. In other words, it is determined that the main catalyst 62a has deteriorated. When the catalyst degeneration determination unit 92 detects the deterioration of the main catalyst 62a, a signal is sent from the ECU 90 to the display 14. A warning lamp (not illustrated) of the display 14 is turned on. This prompts the rider to replace the main catalyst 62a. A notification means for notifying the rider of the deterioration of the main catalyst 62a is not limited to the warning lamp. A text message prompting the replacement may be displayed on a liquid crystal screen of the display 14. Alternatively, the rider may be notified by a device generating sound or vibration.

The catalyst degeneration determination unit 92 may determine the purification capability of the main catalyst 62a based on a signal of the upstream oxygen sensor 76 and a signal of the downstream oxygen sensor 77. For example, the catalyst degeneration determination unit 92 may determine the purification capability of the main catalyst 62a by comparing a change in the signal of the upstream oxygen sensor 76 with a change in the signal of the downstream oxygen sensor 77. By using signals from two oxygen sensors 76 and 77, the degree of deterioration of the main catalyst 62a is further precisely detectable.

The ECU 90 may execute only one of or both of the following two processes. The first process is control of the fuel injection amount based on signals from the upstream oxygen sensor 76 and the downstream oxygen sensor 77. The second process is determination of the purification capability of the main catalyst 62a based on at least the signal from the downstream oxygen sensor 77. When the fuel injection amount control unit 91 controls the fuel injection amount based on the signals from the upstream oxygen sensor 76 and the downstream oxygen sensor 77, the ECU 90 may not include the catalyst degeneration determination unit 92.

The motorcycle 1 of the present embodiment having been described above has the following characteristics.

The ECU 90 determines the purification capability of the main catalyst 62a based on a signal from the downstream oxygen sensor 77. When the ECU 90 determines that the purification capability of the main catalyst 62a has become lower than a predetermined level, a notification is made by the display 14. This makes it possible to notify the rider or the like of the replacement of the main catalyst 62a before the deterioration of the main catalyst 62a reaches a predetermined level. By means of the replacement of the main catalyst 62a, the initial performance of the motorcycle 1 in connection with the exhaust gas purification is therefore maintained for a long time by using a plurality of main catalysts 62a.

Instead of a signal from the downstream oxygen sensor 77, the deterioration of the main catalyst 62a may be detected by using a signal from the upstream oxygen sensor 76. By using signals from two oxygen sensors 76 and 77, the degree of deterioration of the main catalyst 62a is further precisely detectable. It is therefore possible to use a single main catalyst 62a for a long time when compared to cases where the deterioration of the main catalyst 62a is detected solely by a signal from the downstream oxygen sensor 77. Therefore, by means of a plurality of main catalysts 62a, the initial performance of the motorcycle 1 in connection with the exhaust gas purification is maintained for a longer time. In addition to this, the ECU 90 controls the fuel supply amount of the injectors 54 based on a signal from the upstream oxygen sensor 76 and a signal from the downstream oxygen sensor 77. When the signal from the upstream oxygen sensor 76 and the signal from the downstream oxygen sensor 77 are used, the actual purification capability of the main catalyst 62a is detected. Due to this, because the combustion control is executed based on the signals from the two oxygen sensors 76 and 77, the precision of the fuel control is improved when compared to cases where fuel control is executed based solely on the signal from the upstream oxygen sensor 76. For this reason, it is possible to further restrain the progress of the deterioration of the main catalyst 62a. Therefore, the initial performance of the motorcycle 1 in connection with the exhaust gas purification is maintained for a longer time.

As such, the initial performance of the motorcycle 1 in connection with the exhaust gas purification is maintained for a longer time without increasing the size of the main catalyst 62a, irrespective of the use of the downstream oxygen sensor 77. It is therefore possible to restrain the increase in size of the motorcycle 1 in the up-down direction while maintaining the initial performance of the motorcycle 1 in connection with the exhaust gas purification for a long time.

The center of the upstream end of the catalyst portion 62 is provided forward of the crankshaft axis Cr. Due to this, the path length Da1 from the combustion chamber 30 to the catalyst portion 62 is short when compared to cases where the center of the upstream end of the catalyst portion 62 is provided rearward of the crankshaft axis Cr. For this reason, the temperature of the exhaust gas flowing into the main catalyst 62a is further increased. As a result, at the cold start of the engine unit 11, the time required to activate the deactivated main catalyst 62a is further shortened. Due to this, the exhaust gas purification performance of the main catalyst 62a is further improved.

When viewed in the left-right direction, the center of the upstream end of the catalyst portion 62 is positioned behind the linear line La2 and forward of the crankshaft axis Cr. At least a part of the catalyst portion 62 is therefore provided straight below the engine main body 20 when viewed in the left-right direction. The linear line La2 is a linear line which is orthogonal to the cylinder axial line Cy and passes the crankshaft axis Cr when viewed in the left-right direction. The engine main body 20 is provided so that the central axes Cy are along the up-down direction. When the engine main body 20 is provided in this way, it is easy to provide for a space straight below the engine main body 20, behind the linear line La2, and forward of the crankshaft axis Cr. The catalyst portion 62 is provided by utilizing this space. It is therefore possible to restrain the increase in size of the motorcycle 1 in the up-down direction even when at least a part of the catalyst portion 62 is provided straight below the engine main body 20.

Furthermore, the center of the upstream end of the catalyst portion 62 is forward of and above the center of the downstream end of the catalyst portion 62. It is therefore possible to provide the catalyst portion 62 by effectively utilizing the above-described space. Due to this, it is possible to further restrain the increase in size of the motorcycle 1 in the up-down direction. Furthermore, the increase in size of the motorcycle 1 in the front-rear direction is restrained when compared to cases where the center of the upstream end of the catalyst portion 62 is provided forward of and at the same level as the center of the downstream end of the catalyst portion 62.

The cross-sectional area A1 is a cross-sectional area of the downstream end and its surroundings of the upstream collective exhaust passage member 65 cut along the direction orthogonal to the flow direction of the exhaust gas. The cross-sectional area A2 is a cross-sectional area of the catalyst portion 62 cut along the direction orthogonal to the flow direction of the exhaust gas. The cross-sectional area A1 is smaller than the cross-sectional area A2. It is therefore possible to easily provide for a space around the downstream end of the upstream collective exhaust passage member 65 and its surroundings. The upstream oxygen sensor 76 can be provided in this space. The catalyst portion 62 is provided so that the center of the upstream end is forward of and above the center of the downstream end. Due to this, as the upstream oxygen sensor 76 is provided by utilizing this space, the increase in size of the motorcycle 1 in the front-rear direction is restrained while the upstream oxygen sensor 76 is provided upstream of the catalyst portion 62.

The cross-sectional area A3 is a cross-sectional area of the upstream end and its surroundings of the downstream collective exhaust passage member 63 cut along the direction orthogonal to the flow direction of the exhaust gas. The cross-sectional area A3 is smaller than the cross-sectional area A2. It is therefore possible to easily provide for a space around the upstream end of the downstream collective exhaust passage member 63 and its surroundings. The downstream oxygen sensor 77 can be provided in this space. The catalyst portion 62 is provided so that the center of the upstream end is forward of and above the center of the downstream end. Due to this, as the downstream oxygen sensor 77 is provided by utilizing this space, the increase in size of the motorcycle 1 in the front-rear direction is restrained while the downstream oxygen sensor 77 is provided downstream of the catalyst portion 62.

The catalyst portion 62 is provided downstream of the upstream collective exhaust passage member 65 with which a plurality of independent exhaust passage members 64 are connected. Due to this, the number of main catalysts 62a is decreased when compared to cases where the main catalysts 62a are provided for the respective independent exhaust passage members 64. It is therefore possible to restrain the increase in size of the motorcycle 1 in the up-down direction. Furthermore, the upstream oxygen sensor 76 is provided on the upstream collective exhaust passage member 65. Due to this, the number of upstream oxygen sensors 76 is decreased when compared to cases where the upstream oxygen sensors 76 are provided for the respective independent exhaust passage members 64. It is therefore possible to restrain the increase in size of the motorcycle 1 in the up-down direction.

The cross-sectional area A3 is smaller than the cross-sectional area A2 as described above. It is therefore possible to easily provide for a space around the upstream end of the downstream collective exhaust passage member 63 and its surroundings. When viewed in the flow direction of the exhaust gas passing the catalyst portion 62, at least a part of the downstream oxygen sensor 77 overlaps the catalyst portion 62. In other words, the downstream oxygen sensor 77 is provided in the space around the upstream end of the downstream collective exhaust passage member 63 and its surroundings. It is therefore possible to restrain the increase in size of the motorcycle 1 in the up-down direction while the downstream oxygen sensor 77 is provided downstream of the catalyst portion 62.

When viewed in the flow direction of the exhaust gas passing the catalyst portion 62, at least a part of the downstream oxygen sensor 77 overlaps the catalyst portion 62. The downstream oxygen sensor 77 is therefore provided in the vicinity of the catalyst portion 62. The oxygen density detected by the downstream oxygen sensor 77 is therefore similar to the oxygen density of the exhaust gas reaching the downstream end of the main catalyst 62a. The precision of the control by using the downstream oxygen sensor 77 is therefore further improved. In other words, the detection accuracy of deterioration is improved when the deterioration of the main catalyst 62a is detected based on a signal from the downstream oxygen sensor 77. Due to this, one main catalyst 62a can be used for a longer time. Therefore, by means of a plurality of main catalysts 62a, the initial performance of the motorcycle 1 in connection with the exhaust gas purification is maintained for a longer time. Furthermore, the precision of the fuel control is further improved when the fuel control is performed based on signals from the upstream oxygen sensor 76 and the downstream oxygen sensor 77. For this reason, it is possible to further restrain the progress of the deterioration of the main catalyst 62a. Therefore, the initial performance of the motorcycle 1 in connection with the exhaust gas purification is maintained for a longer time.

The cross-sectional area A1 is smaller than the cross-sectional area A2 as described above. It is therefore possible to easily provide for a space around the downstream end of the upstream collective exhaust passage member 65 and its surroundings. When viewed in the direction along the flow direction of the exhaust gas passing the catalyst portion 62, at least a part of the upstream oxygen sensor 76 overlaps the catalyst portion 62. In other words, the upstream oxygen sensor 76 is provided in the space around the downstream end of the upstream collective exhaust passage member 65 and its surroundings. It is therefore possible to restrain the increase in size of the motorcycle 1 in the up-down direction while the upstream oxygen sensor 76 is provided upstream of the catalyst portion 62.

When viewed in the direction along the flow direction of the exhaust gas passing the catalyst portion 62, at least a part of the upstream oxygen sensor 76 overlaps the catalyst portion 62. The upstream oxygen sensor 76 is therefore provided in the vicinity of the catalyst portion 62. The oxygen density detected by the upstream oxygen sensor 76 is therefore similar to the oxygen density of the exhaust gas reaching the upstream end of the main catalyst 62a. The precision of the control by using the upstream oxygen sensor 76 is therefore further improved. In other words, the precision of the fuel control based at least on a signal from the upstream oxygen sensor 76 is further improved. For this reason, it is possible to further restrain the progress of the deterioration of the main catalyst 62a. Therefore, the initial performance of the motorcycle 1 in connection with the exhaust gas purification is maintained for a longer time.

The downstream oxygen sensor 77 is provided on the downstream exhaust passage member 66. The path length Da1 from the combustion chamber 30 to the catalyst portion 62 is therefore short when compared to cases where the downstream oxygen sensor 77 is provided on the muffler member 67. For this reason, the temperature of the exhaust gas flowing into the main catalyst 62a is increased. As a result, at the cold start of the engine unit 11, the time required to activate the deactivated main catalyst 62a is shortened. Due to this, the exhaust gas purification performance of the main catalyst 62a is improved.

The catalyst portion 62 is provided so that the flow direction of the exhaust gas flowing therein is closer to the horizontal direction than to the up-down direction. It is therefore possible to provide the catalyst portion 62 by further effectively utilizing the space which is straight below the engine main body 20, behind the linear line La2, and forward of the crankshaft axis Cr. Due to this, it is possible to further restrain the increase in size of the motorcycle 1 in the up-down direction.

When viewed in the left-right direction, at least a part of the catalyst portion 62 is provided straight below the crankcase member 20a. It is therefore possible to provide the catalyst portion 62 by further effectively utilizing the space which is straight below the crankcase member 20a, behind the linear line La2, and forward of the crankshaft axis Cr. Due to this, it is possible to further restrain the increase in size of the motorcycle 1 in the up-down direction.

When viewed in the left-right direction, an extension Lp of the border between the oil pan 26 and the crankcase 21 passes the catalyst portion 62. It is assumed that the catalyst portion 62 is provided straight above the linear line Lp when viewed in the left-right direction. In this case, the path length Da1 from the combustion chamber 30 to the catalyst portion 62 may be too short. When the path length Da1 from the combustion chamber 30 to the catalyst portion 62 is too short, the temperature of the exhaust gas flowing into the main catalyst 62a may be too high. As a result, the main catalyst 62a may deteriorate due to excessive heat. Due to this, when the catalyst portion 62 is provided so that the linear line Lp passes through the catalyst portion 62 when viewed in the left-right direction, the deterioration of the main catalyst 62a due to excessive heating is prevented. Therefore, the initial performance of the motorcycle 1 in connection with the exhaust gas purification is maintained for a longer time. Furthermore, it is assumed that the catalyst portion 62 is provided straight above the linear line Lp when viewed in the left-right direction. In this case, the lower end of the catalyst portion 62 may be significantly below the lower end of the engine main body 20. In such a case, it is necessary to increase the size of the motorcycle 1 in the up-down direction in order to provide for a sufficient distance between the catalyst portion 62 and the ground. Due to this, when the catalyst portion 62 is provided so that the linear line Lp passes through the catalyst portion 62 when viewed in the left-right direction, the increase in size of the motorcycle 1 in the up-down direction is restrained.

The catalyst portion 62 is provided entirely forward of the crankshaft axis Cr. It is therefore possible to provide the catalyst portion 62 by further effectively utilizing the space which is straight below the engine main body 20, behind the linear line La2, and forward of the crankshaft axis Cr. Due to this, it is possible to further restrain the increase in size of the motorcycle 1 in the up-down direction.

Furthermore, the path length Da1 from the combustion chamber 30 to the catalyst portion 62 is short when compared to cases where a part of the catalyst portion 62 is provided rearward of the crankshaft axis Cr. For this reason, the temperature of the exhaust gas flowing into the main catalyst 62a is increased. As a result, at the cold start of the engine unit 11, the time required to activate the deactivated main catalyst 62a is shortened. Due to this, the exhaust gas purification performance of the main catalyst 62a is improved.

The upstream bended portion 65a of the upstream collective exhaust passage member 65 changes the flow direction of the exhaust gas flowing therein, from the direction along the up-down direction to the direction along the front-rear direction. As the flow direction of the exhaust gas is changed by the upstream bended portion 65a, the scattering of the exhaust gas in the upstream collective exhaust passage member 65 is facilitated. As the scattering of the exhaust gas in the upstream collective exhaust passage member 65 is facilitated, deviation of a position where the exhaust gas passes the main catalyst 62a is restrained. Due to this, as compared with cases where the position is deviated, the exhaust gas purification performance of the main catalyst 62a is improved while the size of the main catalyst 62a is maintained. Due to this, the exhaust gas purification performance of the main catalyst 62a is further improved while the increase in size of the vehicle in the up-down direction is restrained.

### (Modification 1 covered by the present invention)

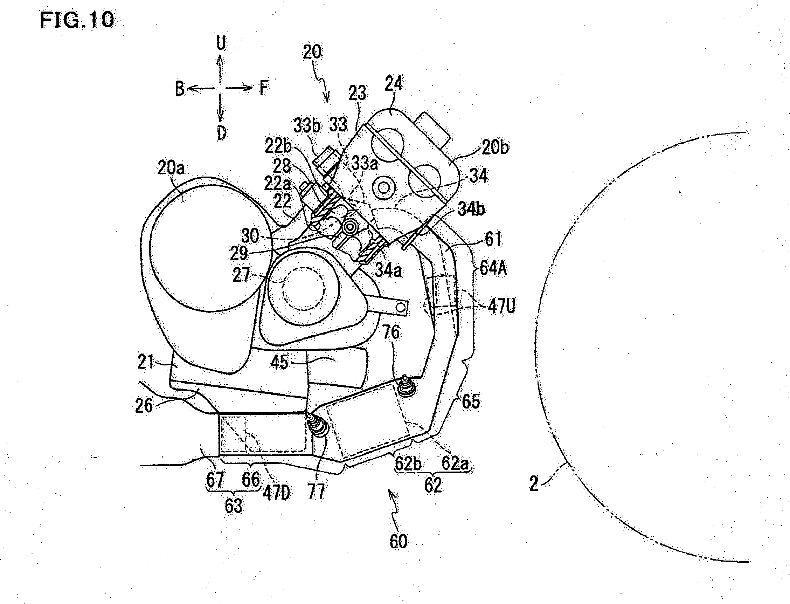

FIG. 10 is a right side view of a part of an engine unit of Modification 1 of the embodiment above. In Modification 1, members identical to those in the embodiment above are indicated by the same reference numerals and detailed descriptions thereof are omitted.

As shown in FIG. 10, an engine unit of Modification 1 includes a downstream sub-catalyst 47D and an upstream sub-catalyst 47U. In the following explanations, the upstream sub-catalyst 47U and the downstream sub-catalyst 47D may be collectively termed sub-catalysts 47 (not illustrated).

The upstream sub-catalyst 47U is provided upstream of the catalyst portion 62. The upstream sub-catalyst 47U is provided in the upstream exhaust passage member 61. The upstream sub-catalyst 47U is provided in at least one of the independent exhaust passage members 64. The upstream sub-catalyst 47U may be provided in the upstream collective exhaust passage member 65. The upstream sub-catalyst 47U may be provided in at least one of the internal exhaust passage members 34. The upstream sub-catalyst 47U is provided upstream of the upstream oxygen sensor 76.

The downstream sub-catalyst 47D is provided downstream of the catalyst portion 62. The downstream sub-catalyst 47D is provided in the downstream collective exhaust passage member 63. The downstream sub-catalyst 47D is provided in the downstream exhaust passage member 66. The downstream sub-catalyst 47D may be provided in the muffler member 67. The downstream sub-catalyst 47D is provided downstream of the downstream oxygen sensor 77.

The sub-catalysts 47 are configured to purify the exhaust gas. The sub-catalysts 47 include a catalyst material which is identical to that in the main catalyst 62a. The sub-catalysts 47 may have a porous structure in the same manner as the main catalyst 62a. The sub-catalysts 47 may not have a porous structure. The following is an example of a sub-catalyst 47 which does not have a porous structure. For example, the sub-catalyst 47 solely includes a catalyst material which is adhered to the inner surface of the downstream collective exhaust passage member 63. In this case, the base to which the catalyst material of the sub-catalyst 47 is adhered is the downstream collective exhaust passage member 63. The following is another example of a sub-catalyst 47 which does not have a porous structure. For example, a sub-catalyst 47 is structured by arranging a catalyst material to be adhered to a plate-shaped base. The cross-sectional shape of the plate-shaped base cut along the direction orthogonal to the flow direction of the exhaust gas is, for example, circular, C-shaped, or S-shaped.

According to Modification 1, the main catalyst 62a purifies the exhaust gas most in the plurality of exhaust paths 69. In other words, the main catalyst 62a purifies the exhaust gas discharged from the combustion chamber 30 in the exhaust paths 69 more than the sub-catalysts 47. To put it differently, the degree of the contribution of the sub-catalysts 47 to the purification of the exhaust gas is lower than that of the main catalyst 62a. The degree of the contribution to the purification of each of the main catalyst 62a, the upstream sub-catalyst 47U, and the downstream sub-catalyst 47D may be measured by the following method.

The engine unit of Modification 1 is driven and, in a warm-up state, the density of harmful substances in the exhaust gas discharged from the atmosphere discharge port 67a is measured. The warm-up state indicates a state in which the temperature of the engine main body 20 is sufficiently high. The method of measuring the exhaust gas is in compliance with European regulations. When the engine unit is in the warm-up state, the main catalyst 62a and the sub-catalysts 47 are hot and activated. The main catalyst 62a and the sub-catalysts 47 can therefore sufficiently exert their purification performances in the warm-up state.

Subsequently, the downstream sub-catalyst 47D is detached from the engine unit of Modification 1 and only the base of the downstream sub-catalyst 47D is provided in place of the downstream sub-catalyst 47D. The engine unit in this state is assumed to be a measurement engine unit A. This measurement engine unit A is driven, and the density of harmful substances in the exhaust gas discharged from the atmosphere discharge port 67a is measured in the warm-up state.

The downstream sub-catalyst 47D may be arranged such that the catalyst material is directly adhered to the inner surface of the downstream collective exhaust passage member 63. In this case, "only the base of the downstream sub-downstream sub-catalyst 47D is provided" indicates that no catalyst material is adhered to the inner surface of the downstream collective exhaust passage member 63.

Subsequently, the main catalyst 62a is detached from the measurement engine unit A, and only the base of the main catalyst 62a is provided in place of the main catalyst 62a. The engine unit in this state is assumed to be a measurement engine unit B. This measurement engine unit B is driven, and the density of harmful substances in the exhaust gas discharged from the atmosphere discharge port 67a is measured in the warm-up state.

Subsequently, the upstream sub-catalyst 47U is detached from the measurement engine unit B, and only the base of the upstream sub-catalyst 47U is provided in place of the upstream sub-catalyst 47U. The engine unit in this state is assumed to be a measurement engine unit C. This measurement engine unit C is driven, and the density of harmful substances in the exhaust gas discharged from the atmosphere discharge port 67a is measured in the warm-up state.

The measurement engine unit C includes neither the main catalyst 62a nor the sub-catalysts 47. The measurement engine unit B includes the upstream sub-catalyst 47U but does not include the main catalyst 62a and the downstream sub-catalyst 47D. The measurement engine unit A includes the main catalyst 62a and the upstream sub-catalyst 47U but does not include the downstream sub-catalyst 47D. Due to this, the degree of the contribution to the purification of the downstream sub-catalyst 47D is calculated from a difference between a measurement result of the engine unit of Modification 1 and a measurement result of the measurement engine unit A. Furthermore, the degree of the contribution to the purification of the main catalyst 62a is calculated from a difference between a measurement result of the measurement engine unit A and a measurement result of the measurement engine unit B. Furthermore, the degree of the contribution to the purification of the upstream sub-catalyst 47U is calculated from a difference between a measurement result of the measurement engine unit B and a measurement result of the measurement engine unit C.

The main catalyst 62a purifies the exhaust gas most in the plurality of exhaust paths 69. As long as this condition is satisfied, the purification capability of the sub-catalysts 47 may be lower than or higher than the purification capability of the main catalyst 62a. A state in which the purification capability of the sub-catalysts 47 is lower than the purification capability of the main catalyst 62a indicates the following state. That is to say, the exhaust gas discharged from the atmosphere discharge port 67a when only a sub-catalyst is provided is purified more than the exhaust gas discharged from the atmosphere discharge port 67a when only the main catalyst 62a is provided.

The upstream catalyst deteriorates more rapidly than the downstream catalyst. For this reason, when hours of use become high, the magnitude correlation between the degree of the contribution to the purification of the main catalyst 62a and the degree of the contribution to the purification of the downstream sub-catalyst 47D may be reversed. For this reason, the state in which the degree of the contribution to the purification of the main catalyst 62a is higher than that of the downstream sub-catalyst 47D is defined as below. That is to say, this state is a state in which, when the running distance has not reached a predetermined distance (e.g., 1000km), the degree of the contribution to the purification of the main catalyst 62a is higher than that of the downstream sub-catalyst 47D.

The volume of the main catalyst 62a is preferably larger than the volume of the sub-catalyst 47. The surface area of the main catalyst 62a is preferably larger than the surface area of the sub-catalyst 47. The amount of noble metals in the main catalyst 62a is preferably larger than the amount of noble metals in the sub-catalyst.

The engine unit may include only one of the upstream sub-catalyst 47U and the downstream sub-catalyst 47D. In such a case, the degree of the contribution to purification can be calculated by a method which is a modification of the method above.

According to Modification 1, the exhaust gas purification performance is improved when compared to cases where no sub-catalyst 47 is provided. Alternatively, when compared to cases where no sub-catalyst 47 is provided, the main catalyst 62a is downsized while the exhaust gas purification performance is maintained. Due to this, the increase in size of the vehicle in the front-rear direction is further restrained, while the initial performance of the vehicle in connection with the exhaust gas purification is maintained for a longer time.

### (Modification 2 not covered by the present invention)

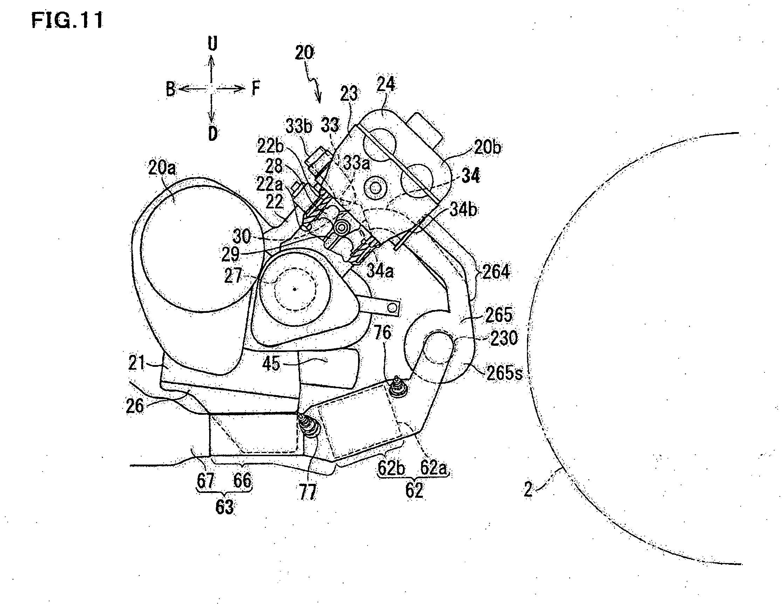

FIG. 11 is a right side view of a part of an engine unit of Modification 2 of the embodiment above. In Modification 2, members identical to those in the embodiment above are indicated by the same reference numerals and detailed descriptions thereof are omitted.

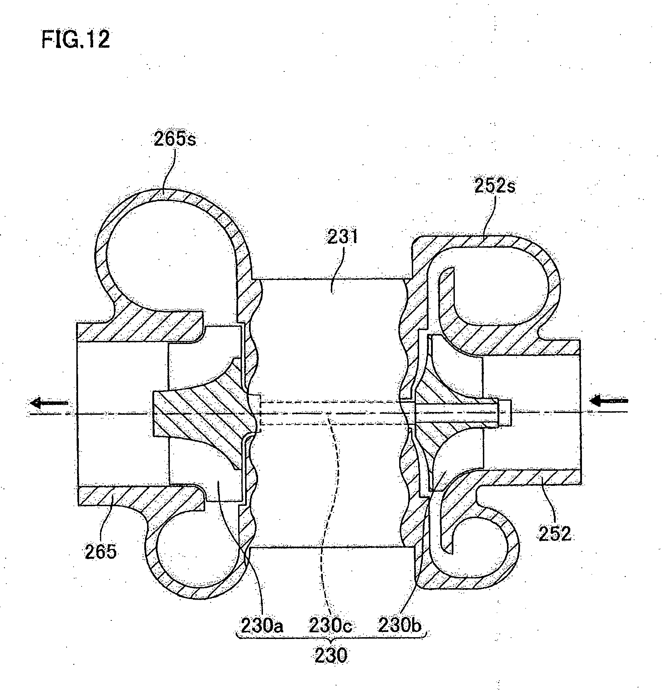

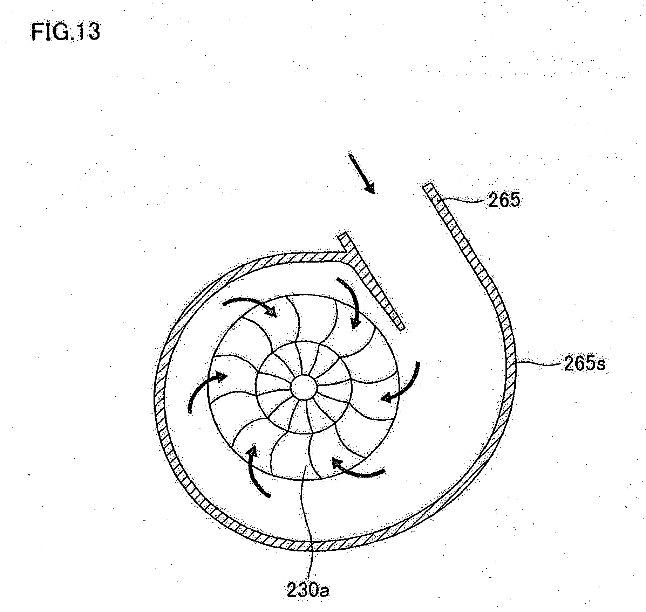

As shown in FIG. 11, an engine unit of Modification 2 includes a turbocharger 230. As shown in FIG. 12, the turbocharger 230 includes a turbine wheel 230a, a compressor wheel 230b, and a connecting shaft 230c. The turbine wheel 230a is connected to the compressor wheel 230b via the connecting shaft 230c. The turbine wheel 230a is provided in an upstream collective exhaust passage member 265. The upstream collective exhaust passage member 265 is connected to the downstream ends of three independent exhaust passage members 264. The upstream collective exhaust passage member 265 and the independent exhaust passage members 264 are provided in place of the upstream collective exhaust passage member 65 and the independent exhaust passage members 64 of the example above. The compressor wheel 230b is provided in an intake passage member 252. The intake passage member 252 is provided in place of the intake passage member 52 of the example above. The connecting shaft 230c is housed in a center housing 231. The center housing 231 is connected to the upstream collective exhaust passage member 265 and the intake passage member 252. The connecting shaft 230c is rotatably supported by the center housing 231. The upstream collective exhaust passage member 265 includes a scroll exhaust passage member 265s. As shown in FIG. 13, the scroll exhaust passage member 265s is formed to surround the outer circumference of the turbine wheel 230a. The intake passage member 252 includes a scroll intake passage member 252s. The scroll intake passage member 252s is formed to surround the outer circumference of the compressor wheel 230b. The exhaust gas in the scroll exhaust passage member 265s is blown onto the outer periphery of the turbine wheel 230a. As a result of this, the turbine wheel 230a rotates. The exhaust gas blown onto the outer periphery of the turbine wheel 230a is discharged from the turbine wheel 230a in the direction along the central axis of the connecting shaft 230c. In accordance with the rotation of the turbine wheel 230a, the compressor wheel 230b rotates. As a result, the compressor wheel 230b sucks air in the direction along the central axis of the connecting shaft 230c. The sucked air is compressed by the compressor wheel 230b. The compressed air is discharged from the outer periphery of the compressor wheel 230b to the scroll intake passage member 252s.

According to Modification 2, compressed air is supplied to the combustion chamber 30 thanks to the turbocharger 230. The intake efficiency is therefore improved. As a result, the output of the engine is improved. Furthermore, because compressed air is supplied to the combustion chamber 30, the cubic capacity of the engine main body 20 can be decreased. The fuel consumption is therefore decreased. Furthermore, the engine main body 20 is downsized. It is therefore possible to further restrain the increase in size of the vehicle in the front-rear direction.

The scroll exhaust passage member 265s shown in FIG. 12 is of a single-scroll type in which only one port is provided to introduce exhaust gas. The scroll exhaust passage member may be of a twin-scroll type in which two ports are provided to introduce exhaust gas. The twin-scroll-type scroll exhaust passage member includes a first scroll passage member and a second scroll passage member. The first scroll passage member and the second scroll passage member are formed in two independent exhaust passage members 264, respectively. The turbine wheel 230a is provided in an upstream collective exhaust passage member 265. The first scroll passage member and the second scroll passage member are arranged to be side by side in the direction along the central axis of the connecting shaft 230c. The exhaust gas in the first scroll passage member and the exhaust gas in the second scroll passage member are blown onto the outer periphery of the turbine wheel 230a. The flows of the exhaust gas discharged from the two scroll passage members are gathered (merged) when passing the turbine wheel 230a. With the twin-scroll-type scroll exhaust passage member, the path length of the independent exhaust passage member 264 is elongated. Due to this, it is possible to prevent the discharge of the exhaust gas from one combustion chamber 30 from being obstructed by the pressure of the exhaust gas discharged from another combustion chamber 30. It is therefore possible to prevent the decrease in the flow rate and pressure of the exhaust gas. The decrease in the output of the engine is prevented for this reason. Furthermore, because the decrease in the flow rate and pressure of the exhaust gas is prevented, the decrease in the rotation speed of the turbine wheel 230a is prevented. The decrease in the intake efficiency is prevented for this reason. When the decrease in the intake efficiency is prevented, the increase in the fuel consumption is prevented and the decrease in the output of the engine is prevented.

When the number of combustion chambers 30 is three or more, the exhaust gas discharged from two or more combustion chambers 30 flows in at least one of the first scroll passage member and the second scroll passage member. For example, when the number of combustion chambers 30 is four, only the exhaust gas discharged from two combustion chambers 30 flows in each scroll passage member. In this case, the exhaust gas discharged from the two combustion chambers 30 is gathered while the exhaust gas flows from the two combustion chambers 30 to the first scroll passage member. Similarly, the exhaust **gas** discharged from the two combustion chambers 30 is gathered while the exhaust gas flows from the remaining two combustion chambers 30 to the second scroll passage member. The upstream end of an exhaust passage member which gathers exhaust gas discharged from the two combustion chambers 30 may be provided inside the engine main body 20 or outside the engine main body 20.

A preferred embodiment of the present invention has been described. It should be noted that the present invention is not limited to the above-described embodiments and modification 1, and various changes, and alterations can be made herein without departing from the scope of the invention as defined by the appended claims. Further, modifications described below may be used in combination as needed as long as they are covered by the subject-matter of the claimed invention. For example, the term "preferably" or "preferable" herein is non-exclusive and means "preferably/preferable, but not limited to."

In the embodiment above, the crankcase 21 and the cylinder body 22 are different members. Alternatively, the crankcase and the cylinder body may be integrally formed. In the embodiment above, the cylinder body 22, the cylinder head 23, and the head cover 24 are different members. Alternatively, two or three of the cylinder body, the cylinder head, and the head cover may be integrally formed. In the embodiment above, the crankcase 21 and the oil pan 26 are different members. Alternatively, the crankcase and the oil pan may be integrally formed.

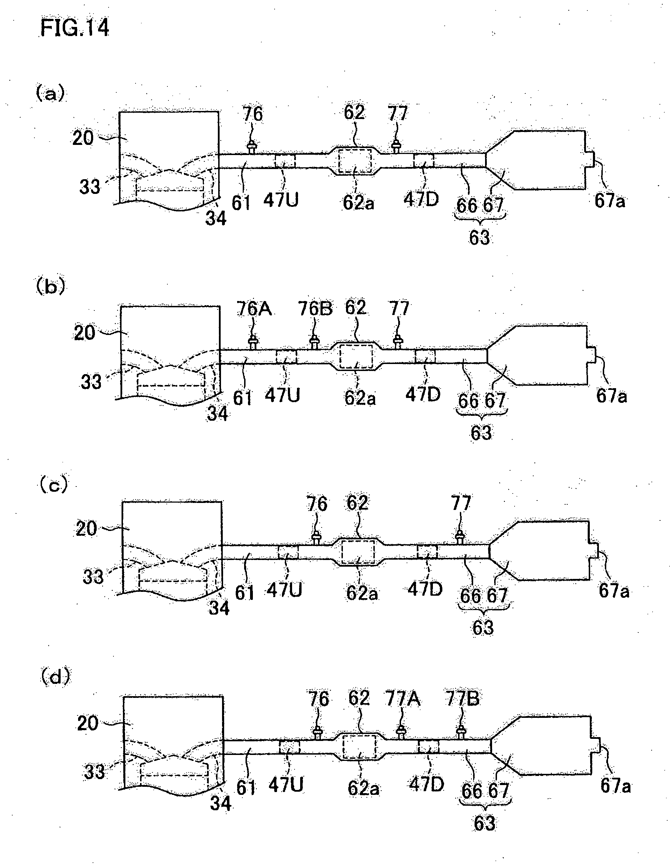

In Modification 1 above, the upstream oxygen sensor 76 is provided downstream of the upstream sub-catalyst 47U. Alternatively, as shown in FIG. 14(a), the upstream oxygen sensor 76 may be provided upstream of the upstream sub-catalyst 47U. Alternatively, as shown in FIG. 14(b), two upstream oxygen sensors 76Aand 76B may be provided upstream and downstream of the upstream sub-catalyst 47U, respectively.

In Modification 1 above, the downstream oxygen sensor 77 is provided upstream of the downstream sub-catalyst 47D. Alternatively, as shown in FIG. 14(c), the downstream oxygen sensor 77 may be provided downstream of the downstream sub-catalyst 47D. Furthermore, as shown in FIG. 14(d), two downstream oxygen sensors 77A and 77B may be provided upstream and downstream of the downstream sub-catalyst 47D, respectively.

In the embodiment above, the cross-sectional area of the main catalyst 62a cut along the direction orthogonal to the flow direction of the exhaust gas is circular. The cross-sectional shape of the main catalyst 62a, however, is not limited to circular. The cross-sectional shape of the main catalyst 62a may be elliptic and long in the left-right direction. In other words, the cross-sectional shape may be flat. The cross-sectional shape of the catalyst portion 62 is preferably analogous to the cross-sectional shape of the main catalyst 62a.

When the sub-catalyst 47 has a porous structure, this modification may be employed in the sub-catalyst 47.

In the embodiment above, the length Dc1 of the catalyst portion 62 is longer than the length Dc2 of the catalyst portion 62. In this regard, the length Dc1 of the catalyst portion 62 may be shorter than the length Dc2 of the catalyst portion 62. The length Dc1 is the length of the catalyst portion 62 along the flow direction of the exhaust gas. The length Dc2 is the maximum length of the catalyst portion 62 in the direction orthogonal to the flow direction of the exhaust gas.

The main catalyst 62a may include a plurality of catalysts provided to be close to one another. Each catalyst includes a base and a catalyst material. Providing a plurality of catalysts to be close to one another indicates the following state. That is to say, catalysts are close to one another in the sense that the distance between neighboring catalysts is short, rather than the length of each catalyst is short in the flow direction of the exhaust gas. The bases of the catalysts may be formed of the same or different materials. The catalyst materials of the catalysts may be the same or different noble metals.

This modification may be employed in the sub-catalyst 47.

In the embodiment above, the exhaust device 60 is arranged so that the catalyst portion 62 is disposed at a right part of the motorcycle 1. Alternatively, the exhaust device 60 may be arranged so that the catalyst portion 62 is disposed at a left part of the motorcycle 1. In this case, the muffler member 67 is also preferably disposed at a left part of the motorcycle 1. The exhaust device 60 may be arranged so that the central axis C3 of the catalyst portion 62 is provided at the center C0 in the left-right direction of the motorcycle 1. Furthermore, the exhaust device 60 may be arranged so that the center of the upstream end and the center of the downstream end of the catalyst portion 62 are positioned on the respective sides of the center C0 in the left-right direction of the motorcycle 1.

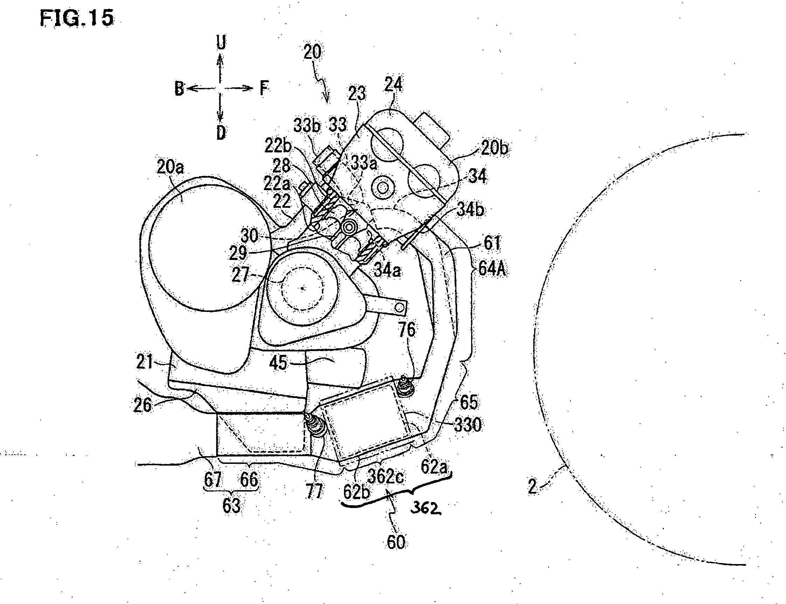

As shown in the embodiment of the invention in FIG. 15, at least a part of the outer surface of the cylindrical part 62b may be covered with a catalyst protector 330. In the catalyst protector 330, a part covering the outer surface of the cylindrical part 62b is termed a catalyst protector portion 362c. The catalyst protector portion 362c is included in a catalyst portion 362. A part of the catalyst protector 330 may be included in the upstream collective exhaust passage member 65. A part of the catalyst protector 330 may be included in the downstream exhaust passage member 66. The catalyst protector portion 362c may or may not be cylindrical in shape. When the catalyst protector portion 362c is provided, the heat keeping effect of the main catalyst 62a is improved. As a result, at the cold start of the engine unit, the time required to activate the deactivated main catalyst 62a is further shortened. Due to this, the exhaust gas purification performance of the main catalyst 62a is further improved. Furthermore, the catalyst protector portion 362c protects the cylindrical part 62b and the main catalyst 62a. Furthermore, the catalyst protector portion 362c improves the appearance.

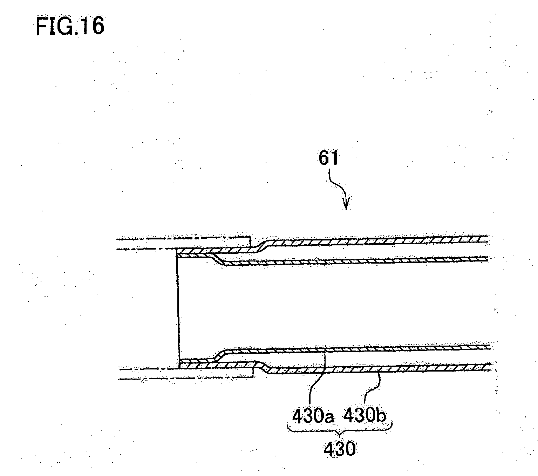

At least a part of the upstream exhaust passage member 61 may be formed of a multi-walled pipe. The multi-walled pipe is constituted by an inner pipe and at least one outer pipe covering the inner pipe. As shown in FIG. 16, the multi-walled pipe may be a double-walled pipe 430. The double-walled pipe 430 includes an inner pipe 430a and an outer pipe 430b. The both end portions of the inner pipe 430a are in contact with the both end portions of the outer pipe 430b. The inner pipe 430a and the outer pipe 430b may be in contact with each other at a part other than the both end portions. For example, the inner pipe 430a and the outer pipe 430b may be in contact with each other at a bended portion. The multi-walled pipe 430 restrains the decrease in the temperature of the exhaust gas in the upstream exhaust passage member 61. As a result, at the cold start of the engine unit 11, the time required to activate the deactivated main catalyst 62a is shortened. Due to this, the exhaust gas purification performance of the main catalyst 62a is further improved.

The exhaust device 60 may include two muffler members 67 for one catalyst portion 62. In other words, the exhaust device 60 may include two atmosphere discharge ports 67a for one catalyst portion 62. In this case, the downstream exhaust passage member 66 is branched into two. The two muffler members 67 are provided to be side by side in the up-down direction. Alternatively, the two muffler members 67 are disposed at a right part and a left part of the motorcycle 1, respectively.

In the embodiment above, the number of exhaust ports 34b is identical to the number of combustion chambers 30 in the engine main body 20. In this regard, when a plurality of combustion chamber exhaust ports 34a are provided for one combustion chamber 30, the number of exhaust ports 34b may be larger than the number of combustion chambers 30.

The number of exhaust ports 34b may be smaller than the number of combustion chambers 30. The number of exhaust ports 34b is at least one. In this case, the exhaust gas discharged from the combustion chambers 30 is gathered inside the engine main body 20. To be more specific, the engine main body 20 includes a plurality of internal independent exhaust passage members and an internal collective exhaust passage member. The plurality of internal independent exhaust passage members are connected to the combustion chambers 30, respectively. The internal collective exhaust passage member is connected to the downstream ends of the internal independent exhaust passage members. The internal collective exhaust passage member gathers the exhaust gas discharged from the internal independent exhaust passage members. The exhaust port 34b is at the downstream end of the internal collective exhaust passage member. The internal collective exhaust passage member is connected to the upstream end of the upstream collective exhaust passage member 65. A plurality of independent exhaust passage members 64 are not provided. According to this modification, the length of a path where only the exhaust gas discharged from one combustion chamber 30 passes is shortened. Due to this, the area of an internal surface of a passage member from the combustion chambers 30 to the catalyst portion 62 is decreased. Due to this, the heat capacity of the passage members from the combustion chambers 30 to the catalyst portion 62 is decreased. The temperature of the exhaust gas flowing into the catalyst portion 62 is therefore increased. As a result, at the cold start of the engine unit 11, the time required to activate the deactivated main catalyst 62a is shortened. Due to this, the exhaust gas purification performance of the main catalyst 62a is improved.

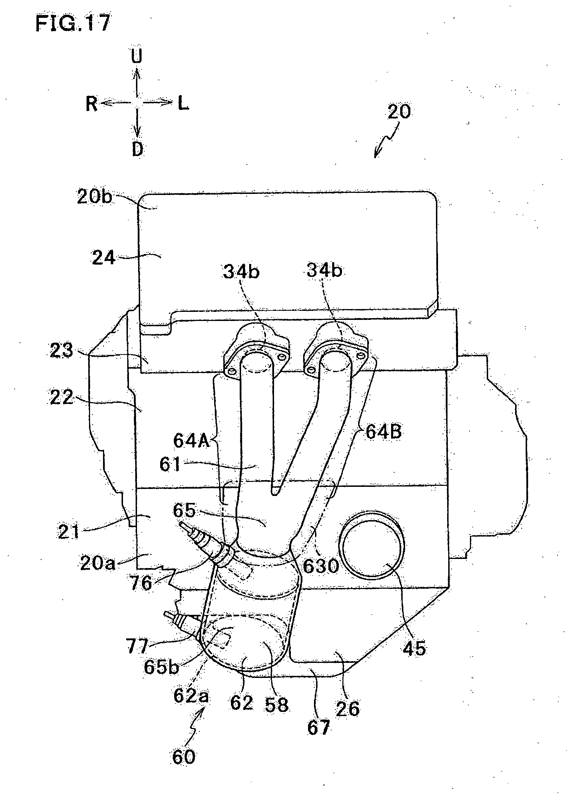

The engine unit 11 may be arranged such that the exhaust gas is cooled by coolant water in a passage member from the combustion chamber 30 to the catalyst portion 62. In other words, the engine unit 11 may include an exhaust gas cooling passage member in which coolant water for cooling the exhaust gas flows. For example, as shown in FIG. 17, at least a part of the exhaust gas cooling passage member 630 may be formed at the outer periphery of at least a part of the upstream collective exhaust passage member 65. Alternatively, for example, as shown in FIG. 18, at least a part of the exhaust gas cooling passage member 630 may be formed at the outer periphery of at least a part of each of the independent exhaust passage members 64. At least a part of the exhaust gas cooling passage member may be formed at the outer periphery of at least a part of each of the internal exhaust passage members 34. The coolant water flowing in the exhaust gas cooling passage member may be shared with or different from the coolant water for cooling the engine main body 20. The cooling of the exhaust gas may be carried out by means of a cooling medium other than water, instead of the coolant water. From the cold start of the engine unit 11 to a predetermined timing, the coolant water in the exhaust gas cooling passage member is preferably not circulated. In other words, the exhaust gas is preferably not to be cooled by the coolant water during this period. The predetermined timing is determined based on, for example, an elapsed time, the total rotation number of the crankshaft 27, or the temperature of the exhaust gas. According to this modification, because the exhaust gas is cooled by the coolant water, excessive increase in the temperature of the exhaust gas flowing into the catalyst portion 62 is prevented. It is therefore possible to prevent the deterioration of the main catalyst 62a due to excessive heating. Due to this, the exhaust gas purification performance of the main catalyst 62a is further improved. Furthermore, when at least a part of the exhaust gas cooling passage member is formed at the outer periphery of at least a part of the upstream collective exhaust passage member 65, the following effect is obtained. The exhaust gas cooling passage member is downsized when compared to cases where the exhaust gas cooling passage member is not provided at the outer periphery of the upstream collective exhaust passage member 65 but provided at the outer periphery of each of the independent exhaust passage members 68. It is therefore possible to restrain the increase in size of the vehicle in the up-down direction and the front-rear direction.

The combustion chamber 30 may include a main combustion chamber and an auxiliary combustion chamber connected to the main combustion chamber. In this case, one combustion chamber connected to the main combustion chamber. In this case, one combustion chamber of the present teaching is formed of the main combustion chamber and the auxiliary combustion chamber.

In the embodiment above, the combustion chambers 30 are arranged to be side by side in the left-right direction. Alternatively, the combustion chambers 30 may be arranged to be side by side in the front-rear direction. In such a case, the exhaust port 34b is formed in the left surface or the right surface of the engine main body.

In the embodiment above, the exhaust port 34b is formed in the front surface of the engine main body 20. Alternatively, the exhaust ports 34b may be formed in the rear surface of the engine main body 20.

In the embodiment above, the engine main body 20 includes two combustion chambers 30. The number of combustion chambers 30 in the engine main body 20 may be three or more.

When the number of combustion chambers 30 is four or more, a plurality of catalyst portions 62 may be provided. Only the exhaust gas discharged from some of the combustion chambers 30 may be allowed to pass one catalyst portion 62. This arrangement will be explained with the assumption that the number of combustion chambers 30 is four. The exhaust device 60 includes a plurality of independent exhaust passage members, two upstream collective exhaust passage members, two catalyst portions, and two downstream collective exhaust passage members. The first upstream collective exhaust passage member gathers the exhaust gas discharged from the right two combustion chambers 30. The second upstream collective exhaust passage member gathers the exhaust gas discharged from the left two combustion chambers 30. The first catalyst portion is connected to the downstream end of the first upstream collective exhaust passage member and the upstream end of the first downstream collective exhaust passage member. The first catalyst portion is connected to the downstream end of the second upstream collective exhaust passage member and the upstream end of the second downstream collective exhaust passage member. Each of the first downstream collective exhaust passage member and the second downstream collective exhaust passage member has an atmosphere discharge port. In this case, the first upstream collective exhaust passage member, the first catalyst portion, and the first downstream collective exhaust passage member are equivalent to the upstream collective exhaust passage member, the catalyst portion, and the downstream collective exhaust passage member of the present teaching, respectively. Furthermore, the second downstream collective exhaust passage member are equivalent to the upstream collective exhaust passage member, the catalyst portion, and the downstream collective exhaust passage member of the present teaching, respectively.

When the number of combustion chambers 30 is four or more, the engine main body 20 may be a so-called V engine. For example, a V4 engine has four combustion chambers, and two combustion chambers are provided in a front side whereas the remaining two combustion chambers are provided in a rear side. The combustion chambers provided in the front part of the V engine are termed front combustion chambers. The front combustion chambers are side by side in the left-right direction. The combustion chambers provided in the rear part of the V engine are termed rear combustion chambers. The rear combustion chambers are side by side in the left-right direction. A cylinder hole forming a part of the front combustion chamber is termed a front cylinder hole. The direction of the central axis of the front cylinder hole is identical to the direction of the cylinder axial line Cy. Each front combustion chamber communicates with the internal exhaust passage member 34, the upstream exhaust passage member 61, the catalyst portion 62, and the downstream collective exhaust passage member 63. The front combustion chambers are encompassed in the plurality of combustion chambers of the present teaching. The rear combustion chamber is not encompassed in the plurality of combustion chambers of the present teaching.

When the engine main body 20 is a V engine, the exhaust gas discharged from the rear combustion chambers may be merged with the exhaust gas discharged from the front combustion chambers. For example, the downstream end of an exhaust passage member communicating with the rear combustion chambers may be connected to the upstream collective exhaust passage member 65. In this case, the exhaust gas discharged from the rear combustion chamber is purified by the main catalyst 62a. For example, the downstream end of an exhaust passage member communicating with the rear combustion chamber may be connected to the downstream exhaust passage member 66. In this case, a catalyst for purifying the exhaust gas discharged from the rear combustion chambers is provided in addition to the main catalyst 62a.

When the engine main body 20 is a V engine, the exhaust gas discharged from the rear combustion chambers may not be merged with the exhaust gas discharged from the front combustion chambers. In this case, a catalyst for purifying the exhaust gas discharged from the rear combustion chambers is provided in addition to the main catalyst 62a.

In the embodiment above, the cylinder axial line Cy is inclined with a positive slope in the forward direction. Alternatively, the cylinder axial line Cy may be inclined with a negative slope in the forward direction. In other words, the cylinder portion 20b may be tilted rearward.

When the number of independent exhaust passage members 64 is three or more, the downstream end of one independent exhaust passage member 64 may be downstream of the downstream end of another independent exhaust passage member 64. In this case, the upstream oxygen sensor 76 is preferably provided downstream of the downstream ends of all independent exhaust passage members 64.

In the example above, the gas flowing in the exhaust path 69 during the driving of the engine unit 11 is only the exhaust gas discharged from the combustion chamber 30. The engine unit 11, however, may include a secondary air supply mechanism configured to supply air to the exhaust path 69. A known arrangement is employed for the specific arrangement of the secondary air supply mechanism. The secondary air supply mechanism may forcibly supply air to the exhaust path 69 by means of an air pump. The secondary air supply mechanism may take air into the exhaust path 69 by a negative pressure in the exhaust path 69. In this case, the secondary air supply mechanism includes a reed valve which is opened and closed in accordance with a pressure change in the exhaust path 69. When the secondary air supply mechanism is included, the upstream oxygen sensor 76 may be provided upstream or downstream of a position of air inflow.

The engine unit of the straddled vehicle in which the present teaching is employed may be an air-cooled engine. The engine unit of the straddled vehicle in which the present teaching is employed may be a natural air-cooled engine unit or a forced air-cooled engine unit.

The applications of the present teaching are not limited to motorcycles. The present teaching may be applied to a leaning vehicle which is not a motorcycle. The leaning vehicle is a vehicle including a vehicle body frame which is configured to lean rightward of the vehicle when turning right and lean leftward of the vehicle when turning left. The present teaching may be applied to a straddled vehicle which is not a motorcycle. The straddled vehicle indicates all types of vehicles on which a rider straddles a vehicle on a saddle. The straddled vehicle to which the present teaching is applicable encompasses vehicles such as motorcycles, tricycles, and four-wheeled buggies (ATVs: All Terrain Vehicles). The front wheel unit of the present teaching may include a plurality of front wheels. The rear wheel unit of the present teaching may include a plurality of rear wheels.

In the specification of the present teaching, the phrase that the upstream collective exhaust passage member 65 merges the exhaust gas discharged from the three independent exhaust passage members 64 indicates that the exhaust gas discharged from the three independent exhaust passage members 64 can be merged. However, the exhaust gas discharged from the three independent exhaust passage members 64 may not be mixed. As described above, the combustion process is carried out at different timings in the three combustion chambers 30. Due to this, the exhaust gas discharged from the three combustion chambers 30 may not be mixed in some cases.

In this specification, an "end" of a component indicates a leading end of the component or a part which forms the outline of the component when the component is viewed in one direction. Meanwhile, an "end portion" of a component indicates a part which includes an "end" of the component and its surroundings.

In this specification, a passage member indicates walls and the like which form a path by surrounding the path. A path indicates a space through which a target passes. The exhaust passage member indicates walls or the like which form the exhaust path by surrounding the exhaust path. The exhaust path indicates a space through which exhaust gas passes.

In this specification, the path length of any part of the exhaust path 69 indicates the length of a line passing the center of the exhaust path. Furthermore, the path length in the expansion chamber in the muffler member 67 is the length of the path connecting the center of the inflow port of the expansion chamber with the center of the outflow port of the expansion chamber in the shortest distance.

In this specification, an inclination angle of a linear line A with respect to a direction B indicates a smaller angle formed by the linear line A and the direction B.

In this specification, a direction along a direction A is not limited to a direction in parallel to the direction A. The direction along the direction A includes a direction tilted by +45 to -45 degrees with respect to the direction A. This definition is applied to cases where a linear line is along the direction A. The direction A does not indicate any specific direction. The direction A may be the horizontal direction or the front-rear direction.

In this specification, when a component A and a component B are side by side in a direction X, the following case is indicated. The component A and the component B are provided to be on a linear line along the direction X. The component A and the component B may or may not be arranged so that a linear line in parallel to the direction X passes through the components.

In this specification, when a component A is provided forward of a component B, the following case is indicated. The component A is provided in front of a plane which passes the frontmost end of the component B and is orthogonal to the front-rear direction. The component A and the component B may or may not be arranged so that a linear line in parallel to the front-rear direction passes through the components. This definition is applicable to directions other than the front-rear direction. (That is to say, this applies to the directions other than "forward of', such as "reward of', "below", "leftward of", and "rightward of'.) Furthermore, this definition is applicable not only to components but also to a part of a component, a linear line, and a plane.

In this specification, when a component A is provided in front of a component B, the entirety of the component A is provided in front of a part of the front surface of the component B, which faces the component A. In this regard, the component A and the component B are arranged so that a linear line in parallel to the front-rear direction passes through the components. Furthermore, when viewed in the front-rear direction, at least a part of the component B overlaps the entire component A. In regard to this definition, when a part of the front surface of the component B, which faces the component A, is the frontmost end of the component B, the component A is provided forward of the component B. When a part of the front surface of the component B, which faces the component A, is not the frontmost end of the component B, the component A may or may not be provided forward of the component B. This definition is applicable to directions other than the front-rear direction. (That is to say, this applies to the directions other than "in front of", such as "behind", "straight below", "to the left of", and "to the right of".) Furthermore, this definition is applicable not only to components but also to a part of a component, a linear line, and a plane. The front surface of the component B indicates a surface which is visible when the component B is viewed from the front side. Depending on the shape of the component B, the front surface of the component B may be formed of a plurality of planes, rather than a single continuous plane,

In this specification, when a component A is provided in front of a component B when viewed in the left-right direction, the entirety of the component A is provided in front of the front surface of the component B when viewed in the left-right direction. In this regard, when viewed in the left-right direction, the component A and the component B are arranged so that a linear line in parallel to the front-rear direction passes through the components. In three dimensions, the component A and the component B may or may not be arranged so that a linear line in parallel to the front-rear direction passes through the components, This definition is applicable to directions other than the front-rear direction. (That is to say, this applies to the directions other than "in front of, such as "behind", "straight below", "to the left of", and "to the right of".) Furthermore, this definition is applicable not only to components but also to a part of a component, a linear line, and a plane.

In this specification, when a component A is provided between a component B and a component C when viewed in the left-right direction, the following state is indicated. To begin with, a case where the component B and the component C are side by side in the front-rear direction when viewed in the left-right direction will be explained. A line segment, which is the uppermost one of line segments connecting points on the outline of the component B with points on the outline of the component C when viewed in the left-right direction, is referred to as a line segment LU. Furthermore, a line segment, which is the lowermost one of line segments connecting the points on the outline of the component B with the points on the outline of the component C when viewed in the left-right direction, is referred to as a line segment LD. The state above is a state in which, when viewed in the left-right direction, the component A is in a quadrangular region having the line segments LU and LD as two sides and does not overlap the components B and C. Subsequently, a case where the component B and the component C are side by side in the up-down direction when viewed in the left-right direction will be explained. A line segment, which is the leftmost one of line segments connecting points on the outline of the component B with points on the outline of the component C when viewed in the left-right direction, is referred to as a line segment LL. Furthermore, a line segment, which is the rightmost one of line segments connecting points on the outline of the component B with points on the outline of the component C when viewed in the left-right direction, is referred to as a line segment line segment LR. The state is a state in which, when viewed in the left-right direction, the component A is in a quadrangular region having the line segments LL and LR as two sides and does not overlap the components B and C. This definition is applicable to cases where the viewing direction is not the left-right direction. Furthermore, this definition is applicable not only to components but also to a part of a component, a linear line, and a plane.

### [Reference Signs List]

1 motorcycle (straddled vehicle)
2 front wheel unit
3 rear wheel unit
4 vehicle body frame
11 engine unit
14 display (notification means)
20, engine main body
20a crankcase member
20b cylinder portion
21 crankcase
22a cylinder hole
26 oil pan
27 crankshaft
30 combustion chamber
34 internal exhaust passage member
34b exhaust port
45 oil filter
47U (47) upstream sub-catalyst
47D (47) downstream sub-catalyst
54 injector (fuel supplier)
60 exhaust device
61 upstream exhaust passage member
62, 362 catalyst portion
62a main catalyst
62b cylindrical part
63 downstream collective exhaust passage member
64, 64A, 64B, 264 independent exhaust passage member
65, 265 upstream collective exhaust passage member
66 downstream exhaust passage member
67 muffler member
67a atmosphere discharge port
68 independent exhaust passage member
69 exhaust path
76 upstream oxygen sensor
77 downstream oxygen sensor
90 ECU (controller)
362c catalyst protector portion
430 double-walled pipe (multi-walled pipe)
430a inner pipe
430b outer pipe

## Claims

1. A straddled vehicle comprising:
a vehicle body frame (4);
an engine unit (11) supported by the vehicle body frame (4);
a front wheel unit (2) including at least one front wheel and provided in front of the engine unit (11) in a vehicle front-rear direction when viewed in a vehicle left-right direction; and
a rear wheel unit (3) including at least one rear wheel and provided behind the engine unit (11) in the front-rear direction when viewed in the left-right direction,
the engine unit (11) including:
an engine main body (20) including a crankshaft (27), cylinder holes (22a), combustion chambers (30), and exhaust ports (34b), the crankshaft (27) having a central axis (Cr) being along the left-right direction, each of the cylinder holes (22a) having a central axis (Cy) along a vehicle up-down direction and being side by side in the left-right direction, each of the combustion chambers (30) being partially formed by the cylinder holes (22a), and the exhaust ports (34b) communicating with the respective combustion chambers (30) being formed on an outer surface of the engine main body (20); and
an exhaust device (60) connected to the exhaust ports (34b) of the engine main body (20) and including an atmosphere discharge port (67a) discharging exhaust gas to the atmosphere,
the exhaust device (60) including:
independent exhaust passage members (64, 64A, 64B) connected to the respective exhaust ports (34b) of the engine main body (20), exhaust gas discharged from the engine main body (20) flowing into the independent exhaust passage members (64, 64A, 64B), wherein, when viewed in the left right direction, the flow directions of the exhaust gas at the downstream ends of the independent exhaust passage members are obliquely rearward and downward;
an upstream collective exhaust passage member (65,) connected to downstream ends of the independent exhaust passage members (64, 64A, 64B) to gather the exhaust gas discharged from the independent exhaust passage members (64, 64A, 64B);
a catalyst portion (62, 362) including a main catalyst (62a) configured to purify the exhaust gas discharged from the combustion chambers (30) most in exhaust paths from the combustion chambers (30) to the atmosphere discharge port (67a), the length of the catalyst portion (62, 362) in a flow direction of the exhaust gas being identical to the length of the main catalyst (62a) in the flow direction of the exhaust gas, the catalyst portion (62, 362) being connected to a downstream end of the upstream collective exhaust passage member (65), the center of an upstream end of the catalyst portion (62, 362) being provided forward of and above the center of a downstream end of the catalyst portion (62, 362) in the up-down direction, and, when viewed in the left-right direction, the center of the upstream end of the catalyst portion (62, 362) being behind, in the front-rear direction, a linear line which is orthogonal to the central axis (Cy) of each of the cylinder holes (22a) and passes a central axis (Cr) of the crankshaft (27) and being forward of the central axis (Cr) of the crankshaft (27) in the front-rear direction;
a downstream collective exhaust passage member (63) including the atmosphere discharge port (67a) and being connected to a downstream end of the catalyst portion (62, 362);
an upstream oxygen sensor (76) which is provided on the upstream collective exhaust passage member (65) to detect the oxygen density of the exhaust gas in the upstream collective exhaust passage member (65); and
a downstream oxygen sensor (77) which is provided on the downstream collective exhaust passage member (63) to detect the oxygen density of the exhaust gas in the downstream collective exhaust passage member (63), wherein, when viewed in the flow direction of the exhaust gas passing the catalyst portion (62, 362), at least a part of the downstream oxygen sensor (77) overlaps the catalyst portion (62, 362), and
the engine unit (11) including a controller (90) configured to process a signal from the upstream oxygen sensor (76) and a signal from the downstream oxygen sensor (77).

2. The straddled vehicle according to claim 1, wherein
the controller (90) is configured to determine purification capability of the main catalyst (62a) based on the signal from the downstream oxygen sensor (77), and
a notification means (14) is provided, the notification means (14) configured to perform a notification when the controller (90) determines that the purification capability of the main catalyst (62a) has been lowered to a predetermined level.

3. The straddled vehicle according to claim 1 or 2, wherein
the engine unit (11) includes a plurality of fuel suppliers (54) configured to supply fuel to the respective combustion chambers (30), and
the controller (90) is configured to control the fuel supply amounts of the fuel suppliers (54) based on the signal from the upstream oxygen sensor (76) and the signal from the downstream oxygen sensor (77).

4. The straddled vehicle according to any one of claims 1 to 3, wherein, when viewed in the flow direction of the exhaust gas passing the catalyst portion (62, 362), at least a part of the upstream oxygen sensor (76) overlaps the catalyst portion (62, 362).

5. The straddled vehicle according to any one of claims 1 to 4, wherein
the downstream collective exhaust passage member (63) includes:
a downstream exhaust passage member (66) having an upstream end connected to the downstream end of the catalyst portion (62, 362); and
a muffler member (67) including the atmosphere discharge port (67a), the muffler member (67) connected to a downstream end of the downstream exhaust passage member (66), and the muffler member (67) being configured to reduce noise generated by the exhaust gas,
the downstream oxygen sensor (77) is provided on the downstream exhaust passage member (66).

6. The straddled vehicle according to any one of claims 1 to 5, wherein the catalyst portion (62, 362) is disposed so that the flow direction of the exhaust gas flowing in the catalyst portion (62, 362) is closer to the front-rear direction than to the up-down direction when viewed in the left-right direction.

7. The straddled vehicle according to any one of claims 1 to 6, wherein
the engine main body (20) includes:
a crankcase member (20a) which is provided at a lower part of the engine main body (20) and includes the crankshaft (27); and
a cylinder portion (20b) which is connected to an upper end portion of the crankcase member (20a) and includes the cylinder holes (22a) and the combustion chambers (30),
when viewed in the left-right direction, at least a part of the catalyst portion (62, 362) is provided straight below the crankcase member (20a) in the up-down direction.

8. The straddled vehicle according to claim 7, wherein
the crankcase member (20a) includes:
a crankcase housing the crankshaft (27); and
an oil pan (26) connected to a lower end portion of the crankcase, and
when viewed in the left-right direction, the catalyst portion (62, 362) is provided so that an extension line of a border between the crankcase and the oil pan (26) passes the catalyst portion (62, 362).

9. The straddled vehicle according to any one of claims 1 to 8, wherein the catalyst portion (62, 362) is provided entirely forward of the central axis (Cr) of the crankshaft (27) in the front-rear direction.

10. The straddled vehicle according to any one of claims 1 to 9, wherein the exhaust device (60) includes at least one downstream sub-catalyst (47, 47D) which is provided in the downstream collective exhaust passage member (63) to purify the exhaust gas.

11. The straddled vehicle according to any one of claims 1 to 10, wherein
the engine main body (20) includes internal exhaust passage members (34) which connect the combustion chambers (30) with upstream ends of the independent exhaust passage members (64, 64A, 64B), respectively, and
the engine unit (11) includes at least one upstream sub-catalyst (47, 47U) which is configured to purify the exhaust gas and is provided in at least one of the internal exhaust passage members (34), the independent exhaust passage members (64, 64A, 64B), and the upstream collective exhaust passage member (65).

12. The straddled vehicle according to any one of claims 1 to 11, wherein at least a part of at least one of the independent exhaust passage members (64, 64A, 64B) and the upstream collective exhaust passage member (65) is formed of a multi-walled pipe (430) which includes an inner pipe (430a) and at least one outer pipe (430b) covering the inner pipe (430a).

13. The straddled vehicle according to any one of claims 1 to 12, wherein the catalyst portion (62, 362) includes:
a cylindrical part (62b) which houses the main catalyst (62a) and is connected to the downstream end of the upstream collective exhaust passage member (65) and an upstream end of the downstream collective exhaust passage member (63); and
a catalyst protector portion (362c) which covers at least a part of an outer surface of the cylindrical part (62b).

14. The straddled vehicle according to any one of claims 1 to 13, wherein
the engine main body (20) includes an oil filter (45) at a front portion, and
the exhaust device (60) and the oil filter (45) are arranged such that, when the exhaust device (60) and the oil filter (45) are viewed from a front side in the front-rear direction, the oil filter (45) is at least partially exposed.

15. The straddled vehicle according to any one of claims 1 to 14, wherein, the number of the catalyst portions (62, 362) is one.

16. The straddled vehicle according to any one of claims 1 to 14, wherein, /
the number of the combustion chambers (30) is four or more,
the straddled vehicle includes a plurality of the catalyst portions (62, 362); and
the exhaust device (60) is configured so that only the exhaust gas discharged from some of the combustion chambers (30) passes a corresponding one of the catalyst portions (62, 362).

## Patentansprüche

1. Ein rittlings zu fahrendes Fahrzeug, das folgende Merkmale aufweist:
einen Fahrzeugkarosserierahmen (4);
eine Motoreinheit (11), die durch den Fahrzeugkarosserierahmen (4) getragen wird;
eine Vorderradeinheit (2), die zumindest ein Vorderrad umfasst und in einer Vorne-Hinten-Richtung vor der Motoreinheit (11) bereitgestellt ist, wenn in einer Links-Rechts-Richtung des Fahrzeugs betrachtet; und
eine Hinterradeinheit (3), die zumindest ein Hinterrad umfasst und in der Vorne-Hinten-Richtung hinter der Motoreinheit (11) bereitgestellt ist, wenn in der Links-Rechts-Richtung betrachtet,
wobei die Motoreinheit (11) Folgendes umfasst:
einen Motorhauptkörper (20), der eine Kurbelwelle (27), Zylinderlöcher (22a), Verbrennungskammern (30) und Abgastore (34b) umfasst, wobei die Kurbelwelle (27) eine Mittelachse (Cr) aufweist, die entlang der Links-Rechts-Richtung liegt, jedes der Zylinderlöcher (22a) eine Mittelachse (Cy) entlang einer Oben-Unten-Richtung des Fahrzeugs aufweist und dieselben in der Links-Rechts-Richtung nebeneinander liegen, jede der Verbrennungskammern (30) teilweise durch die Zylinderlöcher (22a) geformt ist und die Abgastore (34b) mit den jeweiligen Verbrennungskammern (30) kommunizieren, die auf einer Außenoberfläche des Motorhauptkörpers (20) gebildet sind; und
eine Abgasvorrichtung (60), die mit den Abgastoren (34b) des Motorhauptkörpers (20) verbunden ist und ein Atmosphärenausstoßtor (67a) umfasst, das Abgas an die Atmosphäre abgibt,
wobei die Abgasvorrichtung (60) Folgendes umfasst:
unabhängige Abgasdurchgangsbauglieder (64, 64A, 64B), die mit den jeweiligen Abgastoren (34b) des Motorhauptkörpers (20) verbunden sind, wobei Abgas, das von dem Motorhauptkörper (20) abgegeben wird, in die unabhängigen Abgasdurchgangsbauglieder (64, 64A, 64B) strömt, wobei, wenn in der Links-Rechts-Richtung betrachtet, die Strömungsrichtungen des Abgases an den stromabwärtigen Enden der unabhängigen Abgasdurchgangsbauglieder schräg rückwärts und abwärts führen;
ein stromaufwärtiges Sammel-Abgasdurchgangsbauglied (65) das mit stromabwärtigen Enden der unabhängigen Abgasdurchgangsbauglieder (64, 64A, 64B) verbunden ist, um das Abgas aufzunehmen, das von den unabhängigen Abgasdurchgangsbaugliedern (64, 64A, 64B) abgegeben wird;
einen Katalysatorabschnitt (62, 362), der einen Hauptkatalysator (62a) umfasst, der dazu konfiguriert ist, das Abgas, das von den Verbrennungskammern (30) abgegeben wird, am meisten in Abgaswegen von den Verbrennungskammern (30) zu dem Atmosphärenausstoßtor (67a) zu reinigen, wobei die Länge des Katalysatorabschnitts (62, 362) in einer Strömungsrichtung des Abgases identisch mit der Länge des Hauptkatalysators (62a) in der Strömungsrichtung des Abgases ist, der Katalysatorabschnitt (62, 362) mit einem stromabwärtigen Ende des stromaufwärtigen Sammel-Abgasdurchgangsbauglieds (65) verbunden ist, die Mitte eines stromaufwärtigen Endes des Katalysatorabschnitts (62, 362) in der Oben-Unten-Richtung vor und oberhalb der Mitte eines stromabwärtigen Endes des Katalysatorabschnitts (62, 362) bereitgestellt ist und, wenn in der Links-Rechts-Richtung betrachtet, die Mitte des stromaufwärtigen Endes des Katalysatorabschnitts (62, 362) in der Vorne-Hinten-Richtung hinter einer geraden Linie liegt, die orthogonal zu der Mittelachse (Cy) jedes der Zylinderlöcher (22a) ist und
durch eine Mittelachse (Cr) der Kurbelwelle (27) verläuft, und in der Vorne-Hinten-Richtung vor der Mittelachse (Cr) der Kurbelwelle (27) liegt;
ein stromabwärtiges Sammel-Abgasdurchgangsbauglied (63), das das Atmosphärenausstoßtor (67a) umfasst und mit einem stromabwärtigen Ende des Katalysatorabschnitts (62, 362) verbunden ist;
einen stromaufwärtigen Sauerstoffsensor (76), der auf dem stromaufwärtigen Sammel-Abgasdurchgangsbauglied (65) bereitgestellt ist, um die Sauerstoffdichte des Abgases in dem stromaufwärtigen Sammel-Abgasdurchgangsbauglied (65) zu erfassen; und
einen stromabwärtigen Sauerstoffsensor (77), der auf dem stromabwärtigen Sammel-Abgasdurchgangsbauglied (63) bereitgestellt ist, um die Sauerstoffdichte des Abgases in dem stromabwärtigen Sammel-Abgasdurchgangsbauglied (63) zu erfassen, wobei, wenn in der Strömungsrichtung des Abgases betrachtet, das den Katalysatorabschnitt (62, 362) durchläuft, zumindest ein Teil des stromabwärtigen Sauerstoffsensors (77) den Katalysatorabschnitt (62, 362) überlappt, und
die Motoreinheit (11) eine Steuerung (90) umfasst, die dazu konfiguriert ist, ein Signal von dem stromaufwärtigen Sauerstoffsensor (76) und ein Signal von dem stromabwärtigen Sauerstoffsensor (77) zu verarbeiten.

2. Das rittlings zu fahrende Fahrzeug gemäß Anspruch 1, wobei
die Steuerung (90) dazu konfiguriert ist, eine Reinigungsfähigkeit des Hauptkatalysators (62a) auf Basis des Signals von dem stromabwärtigen Sauerstoffsensor (77) zu bestimmen, und
eine Benachrichtigungseinrichtung (14) bereitgestellt ist, wobei die Benachrichtigungseinrichtung (14) dazu konfiguriert ist, eine Benachrichtigung durchzuführen, wenn die Steuerung (90) bestimmt, dass die Reinigungsfähigkeit des Hauptkatalysators (62a) auf einen vorbestimmten Pegel gesenkt wurde.

3. Das rittlings zu fahrende Fahrzeug gemäß Anspruch 1 oder 2, wobei die Motoreinheit (11) eine Mehrzahl von Kraftstoffzuführvorrichtungen (54) umfasst, die dazu konfiguriert sind, den jeweiligen Verbrennungskammern (30) Kraftstoff zuzuführen, und
die Steuerung (90) dazu konfiguriert ist, die Kraftstoffzuführmengen der Kraftstoffzuführvorrichtungen (54) auf Basis des Signals von dem stromaufwärtigen Sauerstoffsensor (76) und des Signals von dem stromabwärtigen Sauerstoffsensor (77) zu steuern.

4. Das rittlings zu fahrende Fahrzeug gemäß einem der Ansprüche 1 bis 3, wobei, wenn in der Strömungsrichtung des Abgases betrachtet, das den Katalysatorabschnitt (62, 362) durchläuft, zumindest ein Teil des stromaufwärtigen Sauerstoffsensors (76) den Katalysatorabschnitt (62, 362) überlappt.

5. Das rittlings zu fahrende Fahrzeug gemäß einem der Ansprüche 1 bis 4, wobei
das stromabwärtige Sammel-Abgasdurchgangsbauglied (63) Folgendes umfasst:
ein stromabwärtiges Abgasdurchgangsbauglied (66), das ein stromaufwärtiges Ende aufweist, das mit dem stromabwärtigen Ende des Katalysatorabschnitts (62, 362) verbunden ist; und
ein Schalldämpferbauglied (67), das das Atmosphärenausstoßtor (67a) umfasst, wobei das Schalldämpferbauglied (67) mit einem stromabwärtigen Ende des stromabwärtigen Abgasdurchgangsbauglieds (66) verbunden ist und das Schalldämpferbauglied (67) dazu konfiguriert ist, Geräusche zu reduzieren, die durch das Abgas erzeugt werden,
der stromabwärtige Sauerstoffsensor (77) auf dem stromabwärtigen Abgasdurchgangsbauglied (66) bereitgestellt ist.

6. Das rittlings zu fahrende Fahrzeug gemäß einem der Ansprüche 1 bis 5, wobei der Katalysatorabschnitt (62, 362) so angeordnet ist, dass die Strömungsrichtung des Abgases, das in den Katalysatorabschnitt (62, 362) strömt, näher zu der Vorne-Hinten-Richtung als zu der Oben-Unten-Richtung liegt, wenn in der Links-Rechts-Richtung betrachtet.

7. Das rittlings zu fahrende Fahrzeug gemäß einem der Ansprüche 1 bis 6, wobei
der Motorhauptkörper (20) Folgendes umfasst:
ein Kurbelwellenbauglied (20a), das an einem unteren Teil des Motorhauptkörpers (20) bereitgestellt ist und die Kurbelwelle (27) umfasst; und
einen Zylinderabschnitt (20b), der mit einem oberen Endabschnitt des Kurbelwellenbauglieds (20a) verbunden ist und die Zylinderlöcher (22a) und die Verbrennungskammern (30) umfasst,
wenn in der Links-Rechts-Richtung betrachtet, zumindest ein Teil des Katalysatorabschnitts (62, 362) in der Oben-Unten-Richtung direkt unterhalb des Kurbelwellenbauglieds (20a) bereitgestellt ist.

8. Das rittlings zu fahrende Fahrzeug gemäß Anspruch 7, wobei das Kurbelwellenbauglied (20a) Folgendes umfasst:
ein Kurbelwellengehäuse, das die Kurbelwelle (27) aufnimmt; und
an Ölwanne (26), die mit einem unteren Endabschnitt der Kurbelwelle verbunden ist, und
wenn in der Links-Rechts-Richtung betrachtet, der Katalysatorabschnitt (62, 362) so bereitgestellt ist, dass eine Erweiterungslinie einer Grenze zwischen der Kurbelwelle und der Ölwanne (26) durch den Katalysatorabschnitt (62, 362) verläuft.

9. Das rittlings zu fahrende Fahrzeug gemäß einem der Ansprüche 1 bis 8, wobei der Katalysatorabschnitt (62, 362) in der Vorne-Hinten-Richtung vollständig vor der Mittelachse (Cr) der Kurbelwelle (27) bereitgestellt ist.

10. Das rittlings zu fahrende Fahrzeug gemäß einem der Ansprüche 1 bis 9, wobei die Abgasvorrichtung (60) zumindest einen stromabwärtigen Subkatalysator (47, 47D) umfasst, der in dem stromabwärtigen Sammel-Abgasdurchgangsbauglied (63) bereitgestellt ist, um das Abgas zu reinigen.

11. Das rittlings zu fahrende Fahrzeug gemäß einem der Ansprüche 1 bis 10, wobei
der Motorhauptkörper (20) innere Abgasdurchgangsbauglieder (34) umfasst, die die Verbrennungskammern (30) jeweils mit stromaufwärtigen Enden der unabhängigen Abgasdurchgangsbauglieder (64, 64A, 64B) verbinden, und
die Motoreinheit (11) zumindest einen stromaufwärtigen Subkatalysator (47, 47U) umfasst, der dazu konfiguriert ist, das Abgas zu reinigen, und in zumindest einem der inneren Abgasdurchgangsbauglieder (34), der unabhängigen Abgasdurchgangsbauglieder (64, 64A, 64B), und des stromaufwärtigen Sammel-Abgasdurchgangsbauglieds (65) bereitgestellt ist.

12. Das rittlings zu fahrende Fahrzeug gemäß einem der Ansprüche 1 bis 11, wobei zumindest ein Teil von zumindest einem der unabhängigen Abgasdurchgangsbauglieder (64, 64A, 64B) und des stromaufwärtigen Sammel-Abgasdurchgangsbauglieds (65) aus einem mehrwandigen Rohr (430) gebildet ist, das ein Innenrohr (430a) und zumindest ein Außenrohr (430b), das das Innenrohr (430a) bedeckt, umfasst.

13. Das rittlings zu fahrende Fahrzeug gemäß einem der Ansprüche 1 bis 12, wobei der Katalysatorabschnitt (62, 362) Folgendes umfasst:
einen zylindrischen Teil (62b), der den Hauptkatalysator (62a) aufnimmt und mit dem stromabwärtigen Ende des stromaufwärtigen kollektiven Abgasdurchgangsbauglieds (65) und einem stromaufwärtigen Ende des stromabwärtigen Sammel-Abgasdurchgangsbauglieds (63) verbunden ist; und
einen Katalysatorschutzabschnitt (362c), der zumindest einen Teil einer Außenoberfläche des zylindrischen Teils (62b) bedeckt.

14. Das rittlings zu fahrende Fahrzeug gemäß einem der Ansprüche 1 bis 13, wobei der Motorhauptkörper (20) ein Ölfilter (45) an einem vorderen Abschnitt umfasst und
die Abgasvorrichtung (60) und das Ölfilter (45) derart angeordnet sind, dass, wenn die Abgasvorrichtung (60) und das Ölfilter (45) von einer Vorderseite in der Vorne-Hinten-Richtung betrachtet werden, das Ölfilter (45) zumindest teilweise freiliegend ist.

15. Das rittlings zu fahrende Fahrzeug gemäß einem der Ansprüche 1 bis 14, wobei die Anzahl der Katalysatorabschnitte (62, 362) eins ist.

16. Das rittlings zu fahrende Fahrzeug gemäß einem der Ansprüche 1 bis 14, wobei
die Anzahl der Verbrennungskammern (30) vier oder mehr ist,
das rittlings zu fahrende Fahrzeug eine Mehrzahl der Katalysatorabschnitte (62, 362) umfasst; und
die Abgasvorrichtung (60) so konfiguriert ist, dass lediglich das Abgas, das von manchen Verbrennungskammern (30) abgegeben wird, einen entsprechenden der der Katalysatorabschnitte (62, 362) durchläuft.

## Revendications

1. Véhicule à selle comprenant:
un châssis de carrosserie de véhicule (4);
une unité de moteur (11) supportée par le châssis de carrosserie de véhicule (4);
une unité de roue avant (2) comportant au moins une roue avant et prévue devant l'unité de moteur (11) dans une direction de l'avant à l'arrière du véhicule lorsque vue dans une direction de gauche à droite du véhicule; et
une unité de roue arrière (3) comportant au moins une roue arrière et prévue derrière l'unité de moteur (11) dans la direction de l'avant à l'arrière lorsque vue dans la direction de gauche à droite,
l'unité de moteur (11) comportant:
un corps principal de moteur (20) comportant un vilebrequin (27), des trous de cylindre (22a), des chambres de combustion (30) et des orifices d'échappement (34b), le vilebrequin (27) présentant un axe central (Cr) qui se situe dans la direction de gauche à droite, les trous de cylindre (22a) présentant, chacun, un axe central (Cy) dans une direction de haut en bas du véhicule et se situant côte à côte dans la direction de gauche à droite, chacune des chambres de combustion (30) étant partiellement formée par les trous de cylindre (22a) et les orifices d'échappement (34b) communiquant avec les chambres de combustion respectives (30) étant formés sur une surface extérieure du corps principal de moteur (20); et
un dispositif d'échappement (60) connecté aux orifices d'échappement (34b) du corps principal de moteur (20) et comportant un orifice d'évacuation à l'atmosphère (67a) évacuant les gaz d'échappement vers l'atmosphère,
le dispositif d'échappement (60) comportant:
des éléments de passage d'échappement indépendants (64, 64A, 64B) connectés aux orifices d'échappement respectifs (34b) du corps principal de moteur (20), les gaz d'échappement évacués du corps principal de moteur (20) circulant dans les éléments de passage d'échappement indépendants (64, 64A, 64B), où, lorsque vues dans la direction de gauche à droite, les directions de circulation des gaz d'échappement aux extrémités aval des éléments de passage d'échappement indépendants sont obliquement vers l'arrière et vers le bas;
un élément de passage d'échappement collecteur amont (65) connecté aux extrémités aval des éléments de passage d'échappement indépendants (64, 64A, 64B) destiné à collecter les gaz d'échappement évacués des éléments de passage d'échappement indépendants (64, 64A, 64B);
une partie de catalyseur (62, 362) comportant un catalyseur principal (62a) configuré pour purifier les gaz d'échappement évacués des chambres de combustion (30) pour la plupart dans les trajets d'échappement des chambres de combustion (30) vers l'orifice d'évacuation à l'atmosphère (67a), la longueur de la partie de catalyseur (62, 362) dans une direction de circulation des gaz d'échappement étant identique à la longueur du catalyseur principal (62a) dans la direction de circulation des gaz d'échappement, la partie de catalyseur (62, 362) étant connectée à une extrémité aval de l'élément de passage d'échappement collecteur amont (65), le centre d'une extrémité amont de la partie de catalyseur (62, 362) étant prévu en avant et au-dessus du centre d'une extrémité aval de la partie de catalyseur (62, 362) dans la direction de haut en bas et, vu dans la direction de gauche à droite, le centre de l'extrémité amont de la partie de catalyseur (62, 362) se situant, dans la direction de l'avant à l'arrière, derrière une ligne linéaire qui est orthogonale à l'axe central (Cy) de chacun des trous cylindriques (22a) et passe par un axe central (Cr) du vilebrequin (27) et se situant à l'avant de l'axe central (Cr) du vilebrequin (27) dans la direction de l'avant à l'arrière;
un élément de passage d'échappement collecteur aval (63) comportant l'orifice d'évacuation à l'atmosphère (67a) et étant connecté à une extrémité aval de la partie de catalyseur (62, 362);
un capteur d'oxygène amont (76) qui est prévu sur l'élément de passage d'échappement collecteur amont (65) pour détecter la densité d'oxygène des gaz d'échappement dans l'élément de passage d'échappement collecteur amont (65); et
un capteur d'oxygène aval (77) qui est prévu sur l'élément de passage d'échappement collecteur aval (63) pour détecter la densité d'oxygène des gaz d'échappement dans l'élément de passage d'échappement collecteur aval (63), où, lorsque vu dans la direction de circulation des gaz d'échappement passant par la partie de catalyseur (62, 362), au moins une partie du capteur d'oxygène aval (77) vient en chevauchement avec la partie de catalyseur (62, 362), et
l'unité de moteur (11) comportant un moyen de commande (90) configuré pour traiter un signal du capteur d'oxygène amont (76) et un signal du capteur d'oxygène aval (77).

2. Véhicule à selle selon la revendication 1, dans lequel
le moyen de commande (90) est configuré pour déterminer la capacité de purification du catalyseur principal (62a) sur base du signal du capteur d'oxygène aval (77), et
est prévu un moyen de notification (14), le moyen de notification (14) étant configuré pour effectuer une notification lorsque le moyen de commande (90) détermine que la capacité de purification du catalyseur principal (62a) a été abaissée à un niveau prédéterminé.

3. Véhicule à selle selon la revendication 1 ou 2, dans lequel
l'unité de moteur (11) comporte une pluralité d'alimentateurs de carburant (54) configurés pour alimenter du carburant vers les chambres de combustion respectives (30), et
le moyen de commande (90) est configuré pour réguler les quantités d'alimentation de carburant des alimentateurs de carburant (54) sur base du signal du capteur d'oxygène amont (76) et du signal du capteur d'oxygène aval (77).

4. Véhicule à selle selon l'une quelconque des revendications 1 à 3, dans lequel, lorsque vue dans la direction de circulation des gaz d'échappement passant par la partie de catalyseur (62, 362), au moins une partie du capteur d'oxygène amont (76) vient en chevauchement avec la partie de catalyseur (62, 362).

5. Véhicule à selle selon l'une quelconque des revendications 1 à 4, dans lequel
l'élément de passage d'échappement collecteur aval (63) comporte:
un élément de passage d'échappement aval (66) présentant une extrémité amont connectée à l'extrémité aval de la partie de catalyseur (62, 362); et
un élément de silencieux (67) comportant l'orifice d'évacuation à l'atmosphère (67a), l'élément de silencieux (67) étant connecté à une extrémité aval de l'élément de passage d'échappement aval (66), et l'élément de silencieux (67) étant configuré pour réduire le bruit généré par les gaz d'échappement,
le capteur d'oxygène aval (77) est prévu sur l'élément de passage d'échappement aval (66).

6. Véhicule à selle selon l'une quelconque des revendications 1 à 5, dans lequel la partie de catalyseur (62, 362) est disposée de sorte que la direction de circulation des gaz d'échappement circulant dans la partie de catalyseur (62, 362) soit plus proche de la direction de l'avant à l'arrière que de la direction de haut en bas lorsque vue dans la direction de gauche à droite.

7. Véhicule à selle selon l'une quelconque des revendications 1 à 6, dans lequel
le corps principal du moteur (20) comporte:
un élément de carter (20a) qui est prévu dans une partie inférieure du corps principal de moteur (20) et comporte le vilebrequin (27); et
une partie de cylindre (20b) qui est connectée à une partie d'extrémité supérieure de l'élément de carter (20a) et comporte les trous de cylindre (22a) et les chambres de combustion (30),
lorsque vue dans la direction de gauche à droite, au moins une portion de la partie de catalyseur (62, 362) est prévue directement au-dessous de l'élément de carter (20a) dans la direction de haut en bas.

8. Véhicule à selle selon la revendication 7, dans lequel l'élément de carter (20a) comporte:
un carter abritant le vilebrequin (27); et
un bac à huile (26) connecté à une partie d'extrémité inférieure du carter, et
lorsque vue dans la direction de gauche à droite, la partie de catalyseur (62, 362) est prévue de sorte qu'une ligne d'extension d'un bord entre le carter et le bac à huile (26) passe par la partie de catalyseur (62, 362).

9. Véhicule à selle selon l'une quelconque des revendications 1 à 8, dans lequel la partie de catalyseur (62, 362) est prévue entièrement en avant de l'axe central (Cr) du vilebrequin (27) dans la direction de l'avant à l'arrière.

10. Véhicule à selle selon l'une quelconque des revendications 1 à 9, dans lequel le dispositif d'échappement (60) comporte au moins un sous-catalyseur aval (47, 47D) qui est prévu dans l'élément de passage d'échappement collecteur aval (63) pour purifier les gaz d'échappement.

11. Véhicule à selle selon l'une quelconque des revendications 1 à 10, dans lequel
le corps principal de moteur (20) comporte des éléments de passage d'échappement internes (34) qui connectent les chambres de combustion (30) respectivement aux extrémités amont des éléments de passage d'échappement indépendants (64, 64A, 64B), et
l'unité de moteur (11) comporte au moins un sous-catalyseur amont (47, 47U) qui est configuré pour purifier les gaz d'échappement et est prévu dans au moins l'un des éléments de passage d'échappement internes (34), les éléments de passage d'échappement indépendants (64, 64A, 64B) et l'élément de passage d'échappement collecteur amont (65).

12. Véhicule à selle selon l'une quelconque des revendications 1 à 11, dans lequel au moins une partie d'au moins l'un des éléments de passage d'échappement indépendants (64, 64A, 64B) et de l'élément de passage d'échappement collecteur amont (65) est formée d'un tuyau à parois multiples (430) qui comporte un tuyau intérieur (430a) et au moins un tuyau extérieur (430b) recouvrant le tuyau intérieur (430a).

13. Véhicule à selle selon l'une quelconque des revendications 1 à 12, dans lequel la partie de catalyseur (62, 362) comporte:
une partie cylindrique (62b) qui abrite le catalyseur principal (62a) et est connectée à l'extrémité aval de l'élément de passage d'échappement collecteur amont (65) et à une extrémité amont de l'élément de passage d'échappement collecteur aval (63); et
une partie de protection de catalyseur (362c) qui recouvre au moins une partie d'une surface extérieure de la partie cylindrique (62b).

14. Véhicule à selle selon l'une quelconque des revendications 1 à 13, dans lequel
le corps principal de moteur (20) comporte un filtre à huile (45) dans une partie avant, et
le dispositif d'échappement (60) et le filtre à huile (45) sont disposés de sorte que, lorsque le dispositif d'échappement (60) et le filtre à huile (45) sont vus d'un côté avant dans la direction de l'avant à l'arrière, le filtre à huile (45) est au moins partiellement exposé.

15. Véhicule à selle selon l'une quelconque des revendications 1 à 14, dans lequel le nombre de parties de catalyseur (62, 362) est de un.

16. Véhicule à selle selon l'une quelconque des revendications 1 à 14, dans lequel
le nombre de chambres de combustion (30) est de quatre ou plus,
le véhicule à selle comporte une pluralité de parties de catalyseur (62, 362); et
le dispositif d'échappement (60) est configuré de sorte que seuls les gaz d'échappement évacués de certaines des chambres de combustion (30) passent par l'une correspondante des parties de catalyseur (62, 362).
